# EUROPEAN PATENT APPLICATION

(11) **EP 4 838 951 A1**
(43) Date of publication of application: **11.11.2026**
(21) Application number: 24921535.1
(22) Date of filing: 21.10.2024
(51) Int. Cl.: H04W 36/00

(54) **COMMUNICATION METHOD AND APPARATUS**

(30) Priority: 02.02.2024 CN 202410163512
(71) Applicant: Huawei Technologies Co., Ltd., Shenzhen, Guangdong 518129 (CN)
(72) Inventor: KUANG, Yiru, Shenzhen, Guangdong 518129 (CN); XUE, Yifan, Shenzhen, Guangdong 518129 (CN)
(74) Representative: Goddar, Heinz J.
(86) International application number: PCT/CN2024/126203
(87) International publication number: WO 2025/161511

(57) **Abstract**

This application relates to a communication method and apparatus. A terminal apparatus measures a serving cell on a WUR, and skips measuring the serving cell on an MR. The terminal apparatus determines, according to a first criterion based on a result of measuring the serving cell on the WUR, whether to perform relaxed measurement on a neighbor cell of the serving cell on the MR, where the first criterion includes that the measurement result is greater than a first threshold, and/or includes that a variation of the measurement result is less than a second threshold. **In** embodiments of this application, the serving cell may be measured on the WUR, and the serving cell is not measured on the MR, so that power consumption caused by measuring the serving cell on the MR is reduced.

## Description

### CROSS-REFERENCE TO RELATED APPLICATIONS

This application claims priority to Chinese Patent Application No. 202410163512.3, filed with the China National Intellectual Property Administration on February 2, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To reduce power consumption of a user equipment (user equipment, UE), the UE may receive a signal via a separate low power small circuit. The low power small circuit may be implemented by using a circuit or a chip with a simple structure, and has low power consumption. The low power small circuit may be referred to as a wake up radio (wake up radio, WUR).

After the WUR is introduced, the UE may receive a reference signal on the WUR. The reference signal is, for example, a low power synchronization signal (low power synchronization signal, LP-SS), and the reference signal may be used by the UE to measure a serving cell. In addition, a main circuit (main radio, MR) is further disposed in the UE, and the UE may also receive a reference signal and perform measurement on the MR. In this operating mechanism, how to reduce the power consumption of the UE is a problem that needs to be resolved.

### SUMMARY

Embodiments of this application provide a communication method and apparatus, to reduce power consumption of a UE by performing corresponding relaxed measurement on an MR after WUR measurement is introduced.

According to a first aspect, a communication method is provided. The method may be performed by a terminal apparatus. The terminal apparatus is, for example, a terminal device, another device including a function of the terminal device, a chip system (or a chip), or another functional module. The chip system or the functional module can implement the function of the terminal device. The chip system or the functional module is, for example, disposed in the terminal device. The method includes: measuring a serving cell on a WUR, and skipping measuring the serving cell on an MR; and determining, according to a first criterion based on a result of measuring the serving cell on the WUR, whether to perform relaxed measurement on a neighbor cell of the serving cell on the MR, where the first criterion includes that the measurement result is greater than a first threshold, and/or includes that a variation of the measurement result is less than a second threshold.

In this embodiment of this application, the serving cell may be measured on the WUR, and the serving cell is not measured on the MR, so that power consumption caused by measuring the serving cell on the MR is reduced. In addition, it may be further determined, according to the first criterion based on the result of measuring the serving cell on the WUR, whether to perform relaxed measurement on the neighbor cell on the MR. If relaxed measurement is performed on the neighbor cell on the MR, measurement power consumption on the MR can be further reduced, thereby reducing device power consumption to a large extent.

In an optional implementation, determining, according to the first criterion based on the result of measuring the serving cell on the WUR, whether to perform relaxed measurement on the neighbor cell of the serving cell on the MR includes: when the result of measuring the serving cell on the WUR fulfills the first criterion, performing relaxed measurement on the neighbor cell on the MR; or when the result of measuring the serving cell on the WUR does not fulfill the first criterion, performing non-relaxed measurement on the neighbor cell on the MR. If the result of measuring the serving cell on the WUR fulfills the first criterion, it indicates that signal quality of the terminal apparatus in the serving cell is good. Although there is a probability that cell reselection or handover may be performed, the probability is not excessively high, and it is unnecessary to obtain excessive measurement results to determine whether to perform cell reselection or handover. Therefore, relaxed measurement can be performed on the neighbor cell on the MR, so that measurement power consumption on the MR can be further reduced.

In an optional implementation, determining, according to the first criterion based on the result of measuring the serving cell on the WUR, whether to perform relaxed measurement on the neighbor cell of the serving cell on the MR includes: when the result of measuring the serving cell on the WUR does not fulfill a second criterion, determining, according to the first criterion based on the result of measuring the serving cell on the WUR, whether to perform relaxed measurement on the neighbor cell on the MR.

In an optional implementation, the method further includes: when the result of measuring the serving cell on the WUR fulfills the second criterion, skipping measuring the neighbor cell on the MR.

For example, it may be first determined whether the result of measuring the serving cell on the WUR fulfills the second criterion. If the result of measuring the serving cell on the WUR fulfills the second criterion, it indicates that signal quality of the terminal apparatus in the serving cell is good, and a probability that the terminal apparatus performs cell reselection or handover is low. Therefore, the neighbor cell may not be measured or the neighbor cell may not be measured on the MR, so that power consumption can be reduced to a large extent.

In an optional implementation, determining, according to the first criterion based on the result of measuring the serving cell on the WUR, whether to perform relaxed measurement on the neighbor cell of the serving cell on the MR includes: when the result of measuring the serving cell on the WUR does not fulfill a second criterion, determining, according to the first criterion based on the result of measuring the serving cell on the WUR, whether to perform relaxed measurement on a first-type neighbor cell and/or a second-type neighbor cell of the serving cell on the MR, where a priority corresponding to a frequency of the first-type neighbor cell is higher than a priority corresponding to a frequency of the serving cell, and a priority corresponding to a frequency of the second-type neighbor cell is equal to or lower than the priority corresponding to the frequency of the serving cell. For example, neighbor cells of the serving cell may be classified into the first-type neighbor cell and the second-type neighbor cell based on priorities of corresponding frequencies. If the result of measuring the serving cell on the WUR does not fulfill the second criterion, for the first-type neighbor cell and/or the second-type neighbor cell, whether to perform relaxed measurement may be determined uniformly according to the first criterion based on the result of measuring the serving cell on the WUR, without separately determining different neighbor cells, so that a determining process can be simplified.

In an optional implementation, the method further includes: when the result of measuring the serving cell on the WUR fulfills the second criterion, skipping measuring the second-type neighbor cell of the serving cell, and performing relaxed measurement on the first-type neighbor cell of the serving cell on the MR or performing non-relaxed measurement on the first-type neighbor cell of the serving cell on the MR, where the priority corresponding to the frequency of the first-type neighbor cell is higher than the priority corresponding to the frequency of the serving cell, and the priority corresponding to the frequency of the second-type neighbor cell is equal to or lower than the priority corresponding to the frequency of the serving cell. If the frequency of the first-type neighbor cell corresponds to a high priority, even if the result of measuring the serving cell on the WUR fulfills the second criterion, the first-type neighbor cell can be measured, so that the terminal apparatus can reselect or be handed over to a cell corresponding to a frequency with a high priority as much as possible.

In an optional implementation, the result of measuring the serving cell on the WUR includes RSRP obtained by measuring the serving cell on the WUR and/or RSRQ obtained by measuring the serving cell on the WUR.

In an optional implementation, performing relaxed measurement on the neighbor cell of the serving cell includes one or more of the following: increasing a measurement periodicity for the neighbor cell; reducing a quantity of neighbor cells; or reducing a quantity of to-be-measured frequencies, where the frequency corresponds to the neighbor cell. Increasing the measurement periodicity can reduce a quantity of measurements, and reducing the quantity of neighbor cells and/or reducing the quantity of to-be-measured frequencies can reduce a quantity of to-be-measured neighbor cells. In this way, relaxed measurement can be implemented, so that power consumption of the terminal apparatus can be reduced. In addition, there may be another relaxed measurement manner. This is not limited in embodiments of this application.

In an optional implementation, the method further includes: receiving first indication information, where the first indication information indicates the first criterion. The first criterion may be predefined in a protocol, may be configured by a network apparatus, or may be preconfigured in the terminal apparatus. For example, that the measurement result of the serving cell corresponding to the WUR is greater than the first threshold and that the variation of the measurement result of the serving cell corresponding to the WUR is less than the second threshold may be predefined in the protocol. The network apparatus may configure, for the terminal apparatus, that the first criterion includes one or both of the two criteria. Optionally, the second criterion may be predefined in the protocol, may be configured by the network apparatus, or may be preconfigured in the terminal apparatus. If both the first criterion and the second criterion are configured by the network apparatus, the network apparatus may configure the first criterion and the second criterion by using one piece of signaling, or may separately configure the first criterion and the second criterion by using different signaling.

In an optional implementation, the method further includes: receiving second indication information, where the second indication information indicates to enable the WUR or a low power WUS on the WUR. In this embodiment of this application, that the terminal apparatus measures the serving cell on the WUR or monitors or detects a reference signal on the WUR may be a function of the terminal apparatus. The function may be activated (or turned on or enabled) by default, or the function may be enabled (or activated or turned on) or disabled (or deactivated or turned off). For example, the network apparatus may enable (or activate or turn on) the function by using the second indication information. For another example, the network apparatus may further disable (or deactivate or turn off) the function by using other indication information. This is flexible.

According to a second aspect, another communication method is provided. The method may be performed by a terminal apparatus. The terminal apparatus is, for example, a terminal device, another device including a function of the terminal device, a chip system (or a chip), or another functional module. The chip system or the functional module can implement the function of the terminal device. The chip system or the functional module is, for example, disposed in the terminal device. The method includes: when a result of measuring a serving cell on a WUR does not fulfill a third criterion, measuring the serving cell and a neighbor cell of the serving cell on an MR; and determining, according to a fourth criterion based on a result of measuring the serving cell on the MR, whether to perform relaxed measurement on the serving cell and the neighbor cell of the serving cell on the MR, where the fourth criterion includes that the result of measuring the serving cell on the MR is greater than a third threshold, and/or includes that a variation of the result of measuring the serving cell on the MR is less than a fourth threshold.

In this embodiment of this application, the terminal apparatus may measure the serving cell on the WUR, and may not measure the serving cell on the MR when a specific condition is fulfilled, so that power consumption caused by measuring the serving cell on the MR is reduced. In addition, the terminal apparatus may further determine, according to the fourth criterion based on the measurement result of the serving cell corresponding to the WUR, whether to perform relaxed measurement on the serving cell and the neighbor cell on the MR. If relaxed measurement is performed on the serving cell and the neighbor cell on the MR, measurement power consumption on the MR can be further reduced, thereby reducing device power consumption to a large extent. In addition, in this embodiment of this application, whether to perform relaxed measurement on the serving cell and the neighbor cell may be determined according to the fourth criterion based on the result of measuring the serving cell on the MR. The measurement result on the MR is generally accurate, so that determining based on the measurement result can improve accuracy of a determining result.

In an optional implementation, determining, according to the fourth criterion based on the result of measuring the serving cell on the MR, whether to perform relaxed measurement on the serving cell and the neighbor cell of the serving cell on the MR includes: when the result of measuring the serving cell on the MR fulfills the fourth criterion, performing relaxed measurement on the serving cell and the neighbor cell on the MR; or when the result of measuring the serving cell on the MR does not fulfill the fourth criterion, performing non-relaxed measurement on the serving cell and the neighbor cell on the MR. If the result of measuring the serving cell on the MR fulfills the fourth criterion, it indicates that signal quality of the terminal apparatus in the serving cell is good. Although there is a probability that cell reselection or handover may be performed, the probability is not excessively high, and it is unnecessary to obtain excessive measurement results to determine whether to perform cell reselection or handover. Therefore, relaxed measurement can be performed on the serving cell and the neighbor cell on the MR, so that measurement power consumption on the MR can be further reduced.

In an optional implementation, the method further includes: when the result of measuring the serving cell on the WUR fulfills the third criterion, skipping measuring the serving cell and the neighbor cell on the MR. If the result of measuring the serving cell on the WUR fulfills the third criterion, it indicates that signal quality of the terminal apparatus in the serving cell is good, and a probability that the terminal apparatus performs cell reselection or handover is low. Therefore, the serving cell and the neighbor cell may not be measured on the MR, so that power consumption of the terminal apparatus can be reduced.

In an optional implementation, the method further includes: when the result of measuring the serving cell on the WUR fulfills the third criterion, skipping measuring a second-type neighbor cell of the serving cell, and performing relaxed measurement on the serving cell and a first-type neighbor cell of the serving cell on the MR, where a priority corresponding to a frequency of the first-type neighbor cell is higher than a priority corresponding to a frequency of the serving cell. For example, neighbor cells of the serving cell may be classified into the first-type neighbor cell and the second-type neighbor cell based on priorities of corresponding frequencies. If the frequency of the first-type neighbor cell corresponds to a high priority, even if the result of measuring the serving cell on the WUR fulfills the third criterion, the first-type neighbor cell can be measured, so that the terminal apparatus can reselect or be handed over to a cell corresponding to a frequency with a high priority as much as possible.

In an optional implementation, determining, according to the fourth criterion based on the result of measuring the serving cell on the MR, whether to perform relaxed measurement on the serving cell and the neighbor cell of the serving cell on the MR includes: determining, according to the fourth criterion based on the result of measuring the serving cell on the MR, whether to perform relaxed measurement on the serving cell and the first-type neighbor cell and/or the second-type neighbor cell of the serving cell on the MR, where the priority corresponding to the frequency of the first-type neighbor cell is higher than the priority corresponding to the frequency of the serving cell, and a priority corresponding to a frequency of the second-type neighbor cell is equal to or lower than the priority corresponding to the frequency of the serving cell. For the serving cell and the first-type neighbor cell, and/or the second-type neighbor cell, whether to perform relaxed measurement may be determined uniformly according to the fourth criterion based on the result of measuring the serving cell on the WUR, without separately determining different neighbor cells, so that a determining process can be simplified.

In an optional implementation, the result of measuring the serving cell on the WUR includes RSRP obtained by measuring the serving cell on the WUR and/or RSRQ obtained by measuring the serving cell on the WUR; and/or the result of measuring the serving cell on the MR includes RSRP obtained by measuring the serving cell on the MR and/or RSRQ obtained by measuring the serving cell on the MR.

In an optional implementation, performing relaxed measurement on the serving cell and the neighbor cell of the serving cell includes one or more of the following: increasing a measurement periodicity for the serving cell; increasing a measurement periodicity for the neighbor cell; reducing a quantity of neighbor cells; or reducing a quantity of to-be-measured frequencies, where the frequency corresponds to the neighbor cell.

In an optional implementation, the method further includes: receiving first indication information, where the first indication information indicates the fourth criterion.

In an optional implementation, the method further includes: receiving second indication information, where the second indication information indicates to enable the WUR or a low power WUS on the WUR.

For technical effect brought by some optional implementations of the second aspect, refer to descriptions of technical effect brought by the first aspect or the corresponding implementations.

According to a third aspect, still another communication method is provided. The method may be performed by a terminal apparatus. The terminal apparatus is, for example, a terminal device, another device including a function of the terminal device, a chip system (or a chip), or another functional module. The chip system or the functional module can implement the function of the terminal device. The chip system or the functional module is, for example, disposed in the terminal device. The method includes: when a result of measuring a serving cell on a WUR does not fulfill a fifth criterion, performing non-relaxed measurement on the serving cell on an MR, where the fifth criterion includes that the result of measuring the serving cell on the WUR is greater than a fifth threshold, and/or includes that a variation of the result of measuring the serving cell on the WUR is less than a sixth threshold; and determining, according to a sixth criterion based on a result of measuring the serving cell on the MR, whether to perform relaxed measurement on a neighbor cell of the serving cell on the MR.

In this embodiment of this application, the terminal apparatus may measure the serving cell on the WUR, and may determine, according to the fifth criterion, whether to perform relaxed measurement on the serving cell on the MR, so that power consumption caused by measuring the serving cell on the MR is reduced. In addition, the terminal apparatus may further determine, according to the sixth criterion based on the measurement result of the serving cell corresponding to the WUR, whether to perform relaxed measurement on the neighbor cell on the MR. If relaxed measurement is performed on the neighbor cell on the MR, measurement power consumption on the MR can be further reduced, thereby reducing device power consumption to a large extent. In this embodiment of this application, the measurement action on the serving cell is decoupled from the measurement action on the neighbor cell, so that the measurement actions of the terminal apparatus are more reasonable.

In an optional implementation, determining, according to the sixth criterion based on the result of measuring the serving cell on the MR, whether to perform relaxed measurement on the neighbor cell of the serving cell on the MR includes: when the result of measuring the serving cell on the MR fulfills the sixth criterion, performing relaxed measurement on the neighbor cell on the MR; or when the result of measuring the serving cell on the MR does not fulfill the sixth criterion, performing non-relaxed measurement on the neighbor cell on the MR. If the result of measuring the serving cell on the MR fulfills the sixth criterion, it indicates that signal quality of the terminal apparatus in the serving cell is good. Although there is a probability that cell reselection or handover may be performed, the probability is not excessively high, and it is unnecessary to obtain excessive measurement results to determine whether to perform cell reselection or handover. Therefore, relaxed measurement can be performed on the neighbor cell on the MR, so that measurement power consumption on the MR can be further reduced.

In an optional implementation, the method further includes: when the result of measuring the serving cell on the WUR fulfills the fifth criterion, skipping measuring the serving cell on the MR, or measuring the serving cell on the MR in a relaxed measurement manner, and skipping measuring the neighbor cell, or skipping measuring the neighbor cell on the MR. If the result of measuring the serving cell on the WUR fulfills the fifth criterion, it indicates that signal quality of the terminal apparatus in the serving cell is good, and a probability that the terminal apparatus performs cell reselection or handover is low. Therefore, the serving cell may not be measured on the MR and the neighbor cell may not be measured (or the neighbor cell may not be measured on the MR), so that power consumption can be reduced to a large extent. Alternatively, because the measurement action of the serving cell is important, even if the result of measuring the serving cell on the WUR fulfills the fifth criterion, the terminal apparatus can measure the serving cell on the MR, but the terminal apparatus may not measure the neighbor cell on the MR or not measure the neighbor cell, so that power consumption can be reduced to some extent.

In an optional implementation, when the result of measuring the serving cell on the WUR fulfills the fifth criterion, skipping measuring the serving cell on the MR, or measuring the serving cell on the MR in the relaxed measurement manner includes: when the result of measuring the serving cell on the WUR fulfills the fifth criterion and a seventh criterion, skipping measuring the serving cell on the MR; or when the result of measuring the serving cell on the WUR fulfills the fifth criterion and does not fulfill the seventh criterion, measuring the serving cell on the MR in the relaxed measurement manner, where the seventh criterion includes that the result of measuring the serving cell on the WUR is greater than a seventh threshold, and/or includes that a variation of the result of measuring the serving cell on the WUR is less than an eighth threshold. If the result of measuring the serving cell on the WUR fulfills the fifth criterion, the terminal apparatus may perform relaxed measurement on the serving cell on the MR, or may not measure the serving cell on the MR. To clarify an action of the terminal apparatus, this embodiment of this application provides the seventh criterion, to determine, according to the seventh criterion, whether the terminal apparatus performs relaxed measurement on the serving cell on the MR or does not measure the serving cell on the MR.

In an optional implementation, the method further includes: when the result of measuring the serving cell on the WUR fulfills the fifth criterion, performing relaxed measurement on the serving cell and a first-type neighbor cell of the serving cell on the MR, and skipping measuring a second-type neighbor cell of the serving cell on the MR, where a priority corresponding to a frequency of the first-type neighbor cell is higher than a priority corresponding to a frequency of the serving cell, and a priority corresponding to a frequency of the second-type neighbor cell is equal to or lower than the priority corresponding to the frequency of the serving cell. For example, neighbor cells of the serving cell may be classified into the first-type neighbor cell and the second-type neighbor cell based on priorities of corresponding frequencies. If the frequency of the first-type neighbor cell corresponds to a high priority, even if the result of measuring the serving cell on the WUR fulfills the fifth criterion, the first-type neighbor cell can be measured, so that the terminal apparatus can reselect or be handed over to a cell corresponding to a frequency with a high priority as much as possible.

In an optional implementation, the method further includes: when the result of measuring the serving cell on the WUR does not fulfill the fifth criterion, performing non-relaxed measurement on the first-type neighbor cell of the serving cell on the MR, where the priority corresponding to the frequency of the first-type neighbor cell is higher than the priority corresponding to the frequency of the serving cell. When the result of measuring the serving cell on the WUR does not fulfill the fifth criterion, the terminal apparatus may perform non-relaxed measurement on the serving cell on the MR, and may further perform non-relaxed measurement on the first-type neighbor cell on the MR. For example, it may be understood that, because the frequency of the first-type neighbor cell corresponds to a high priority, the measurement action of the terminal apparatus on the first-type neighbor cell may be consistent with the measurement action on the serving cell, so that the first-type neighbor cell can be measured as much as possible.

In an optional implementation, determining, according to the sixth criterion based on the result of measuring the serving cell on the MR, whether to perform relaxed measurement on the neighbor cell of the serving cell on the MR includes: determining, according to the sixth criterion based on the result of measuring the serving cell on the MR, whether to perform relaxed measurement on the second-type neighbor cell of the serving cell on the MR, where the priority corresponding to the frequency of the second-type neighbor cell is equal to or lower than the priority corresponding to the frequency of the serving cell. For example, if the result of measuring the serving cell on the MR fulfills the sixth criterion, it indicates that signal quality of the terminal apparatus in the serving cell is good. Although there is a probability that cell reselection or handover may be performed, the probability is not excessively high, and it is unnecessary to obtain excessive measurement results to determine whether to perform cell reselection or handover. Therefore, the terminal apparatus can perform, on the MR, relaxed measurement on the second-type neighbor cell corresponding to a frequency with a low priority, so that measurement power consumption on the MR can be further reduced.

In an optional implementation, the result of measuring the serving cell on the WUR includes RSRP obtained by measuring the serving cell on the WUR and/or RSRQ obtained by measuring the serving cell on the WUR; and/or the result of measuring the serving cell on the MR includes RSRP obtained by measuring the serving cell on the MR and/or RSRQ obtained by measuring the serving cell on the MR.

In an optional implementation, performing relaxed measurement on the neighbor cell of the serving cell includes one or more of the following: increasing a measurement periodicity for the neighbor cell; reducing a quantity of neighbor cells; or reducing a quantity of to-be-measured frequencies, where the frequency corresponds to the neighbor cell.

In an optional implementation, the method further includes: receiving third indication information, where the third indication information indicates the second criterion.

In an optional implementation, the method further includes: receiving second indication information, where the second indication information indicates to enable the WUR or a low power WUS on the WUR.

For technical effect brought by some optional implementations of the third aspect, refer to descriptions of technical effect brought by the first aspect or the corresponding implementations.

According to a fourth aspect, a communication apparatus is provided. The communication apparatus may be the terminal apparatus according to any one of the first aspect to the third aspect. The communication apparatus has a function of the foregoing terminal apparatus. The communication apparatus is, for example, a terminal device, another device including a function of the terminal device, a chip system (or a chip), or another functional module. The chip system or the functional module can implement the function of the terminal device. The chip system or the functional module is, for example, disposed in the terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to: measure a serving cell on a WUR, and skip measuring the serving cell on an MR. The processing unit is further configured to determine, according to a first criterion based on a result of measuring the serving cell on the WUR, whether to perform relaxed measurement on a neighbor cell of the serving cell on the MR, where the first criterion includes that the measurement result is greater than a first threshold, and/or includes that a variation of the measurement result is less than a second threshold.

In an optional implementation, the processing unit is configured to: when the result of measuring the serving cell on the WUR does not fulfill a third criterion, measure the serving cell and the neighbor cell of the serving cell on the MR. The processing unit is further configured to determine, according to a fourth criterion based on a result of measuring the serving cell on the MR, whether to perform relaxed measurement on the serving cell and the neighbor cell of the serving cell on the MR, where the fourth criterion includes that the result of measuring the serving cell on the MR is greater than a third threshold, and/or includes that a variation of the result of measuring the serving cell on the MR is less than a fourth threshold.

In an optional implementation, the processing unit is configured to: when the result of measuring the serving cell on the WUR does not fulfill a fifth criterion, perform non-relaxed measurement on the serving cell on the MR, where the fifth criterion includes that the result of measuring the serving cell on the WUR is greater than a fifth threshold, and/or includes that the variation of the result of measuring the serving cell on the WUR is less than a sixth threshold. The processing unit is further configured to determine, according to a sixth criterion based on the result of measuring the serving cell on the MR, whether to perform relaxed measurement on the neighbor cell of the serving cell on the MR.

In an optional implementation, the communication apparatus further includes a storage unit (sometimes also referred to as a storage module). The processing unit is configured to: be coupled to the storage unit, and execute a program or instructions in the storage unit, to cause the communication apparatus to perform a function of the terminal apparatus according to any one of the first aspect to the third aspect.

According to a fifth aspect, a communication apparatus is provided. The communication apparatus may be a terminal device, or may be a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the terminal apparatus according to the foregoing aspects.

According to a sixth aspect, a communication system is provided, and includes a terminal apparatus. The terminal apparatus is configured to perform the method performed by the terminal apparatus according to any one of the first aspect to the third aspect. For example, the terminal apparatus may be implemented by using the communication apparatus according to the fourth aspect or the fifth aspect. Optionally, the communication system may further include another apparatus, for example, a network apparatus serving the terminal apparatus. This is not limited herein.

According to a seventh aspect, a computer-readable storage medium is provided. The computer-readable storage medium is configured to store a computer program or instructions. When the computer program or the instructions are run, the method performed by the terminal apparatus according to the foregoing aspects is implemented.

According to an eighth aspect, a computer program product including instructions is provided. When a computer program or the instructions are run on a computer, the method according to the foregoing aspects is implemented.

According to a ninth aspect, a chip system is provided, and includes a processor and an interface. The processor is configured to invoke instructions from the interface and run the instructions, to cause the chip system to implement the method according to the foregoing aspects.

### BRIEF DESCRIPTION OF DRAWINGS

FIG. 1 is a diagram of an operating mode of a circuit A and an MR;
FIG. 2 is a diagram of an application scenario according to an embodiment of this application;
FIG. 3 is a flowchart of a communication method according to an embodiment of this application;
FIG. 4 is a diagram of a communication method according to an embodiment of this application;
FIG. 5 is a flowchart of another communication method according to an embodiment of this application;
FIG. 6 is a diagram of another communication method according to an embodiment of this application;
FIG. 7 is a flowchart of still another communication method according to an embodiment of this application;
FIG. 8A and FIG. 8B are two diagrams of still another communication method according to embodiments of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of a noun indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, priorities, importance, or the like of the plurality of objects. In addition, step numbers in embodiments described in this application are merely for distinguishing between different steps, but are not for limiting a sequence of the steps. For example, S301 may be performed before S302, may be performed after S302, or may be performed simultaneously with S302.

The following explains and describes some terms or concepts in embodiments of this application, to facilitate understanding by a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: sensing scenarios, cellular communication, device-to-device (device-to-device, D2D) communication, vehicle-to-everything (vehicle-to-everything, V2X), machine-to-machine/machine-type communication (machine-to-machine /machine-type communication, M2M/MTC), the internet of things (internet of things, IoT), virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, smart city (smart city), uncrewed aerial vehicle, robot, and indoor commercial scenarios (such as mobile phone projection, file sharing, and video transmission from a mobile phone to VR glasses). The terminal device may also be referred to as a V2X device when used in V2X, for example, a smart vehicle (smart car or intelligent car), a digital car (digital car), an uncrewed vehicle (unmanned car, driverless car, pilotless car, or automobile), an autonomous vehicle (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). Alternatively, the terminal device may be a device, for example, an electricity meter or a water meter, in the D2D communication.

In addition, in embodiments of this application, the terminal device may alternatively be a terminal device in an internet of things (internet of things, IoT) system. IoT is an important part of future information technology development. A main technical feature of IoT is that an article is connected to a network by using a communication technology, to implement an intelligent network of man-machine interconnection and interconnection between things.

If various terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may use the vehicle-mounted module, the vehicle-mounted assembly, the vehicle-mounted component, the vehicle-mounted chip, or the vehicle-mounted unit that is built in the vehicle, to implement the method in this application.

The terminal device sometimes may be referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is a terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following provides descriptions by using an example in which the access network device is a base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. For example, the core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open (open RAN, ORAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-CP, O-CU-UP), and the RU may also be referred to as an open RU (open RU, O-RU). For ease of description, in embodiments of this application, the CU, the CU-CP, the CU-UP, the DU, and the RU are used as examples for description. Any one of the CU (the CU-CP or the CU-UP), the DU, and the RU in embodiments of this application may be implemented by a software module, a hardware module, or a combination of a software module and a hardware module.

Optionally, in embodiments of this application, if the network device is in a distributed architecture, for example, the network device includes a CU and a DU, or includes a CU-CP, a CU-UP, and a DU, that the network device sends information to the UE may be specifically that the DU included in the network device sends information to the UE; and that the network device receives information from the UE may be specifically that the DU included in the network device receives information from the UE.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is a network device (for example, an apparatus configured to implement a function of the access network device is an access network device, and an apparatus configured to implement a function of the core network device is a core network device).

The following describes technical features in embodiments of this application.

When a UE is in a radio resource control (radio resource control, RRC) idle state or an RRC inactive (inactive) state, the UE calculates a position of a paging frame (paging frame, PF) and a position of a paging occasion (paging occasion, PO) in one PF based on a UE identity (ID) of the UE, to receive paging in the PO. Regardless of whether the UE performs the foregoing paging receiving procedure in the RRC idle state or the RRC inactive state, or receives data in an RRC connected (connected) state, the UE uses a same receiving module. For example, the receiving module is referred to as a main circuit (main radio, MR). That the UE operates on the MR may also be described or understood as that the UE operates on a 5th generation (5th generation, 5G) new radio (new radio, NR) primary link.

To further reduce power consumption, the UE may further receive a signal via a circuit, for example, referred to as a circuit A, independent of the MR. The circuit A may be implemented by using a circuit or a chip with a simple structure, and has low power consumption. The circuit A is configured to receive a WUS from a network device, and the WUS received via the circuit A is also referred to as a low power wake up signal (low power wake up signal, LP-WUS). When the UE detects the LP-WUS or receives the LP-WUS and demodulates wake up indication information based on information carried in the LP-WUS, the UE wakes up an MR in an off state (or in a sleep state) in the UE. The LP-WUS may be used for waking up at least one UE or at least one group of UEs. The circuit A is, for example, referred to as a wake up radio (wake up radio, WUR). To reduce power consumption of the WUR circuit, some simple modulation schemes such as on off keying (on off keying, OOK) are usually used for the LP-WUS signal. Correspondingly, the WUR in the UE receives the LP-WUS in an envelope detection manner. That the UE receives the wake up signal via the circuit A may be referred to as that the UE operates on a WUR link/an LR link, or referred to as that the WUR/an LR is in an operating state.

For example, when the UE is powered on, the UE may first search the MR for a signal of the NR primary link. If the signal of the NR primary link can be found, the UE can camp on the NR primary link. If the signal of the NR primary link indicates configuration information of the LP-WUS, the UE may further search the circuit A for the LP-WUS based on the configuration information of the LP-WUS. If the LP-WUS can be found, and signal quality of the LP-WUS is good, the UE can operate on the circuit A. Alternatively, when the UE is powered on, the UE may first search the MR for the signal of the NR primary link. If the signal of the NR primary link cannot be found, the UE may search for the LP-WUS based on configuration information preset in the UE. If the LP-WUS can be found and the signal quality of the LP-WUS is good, the UE can operate on the circuit A.

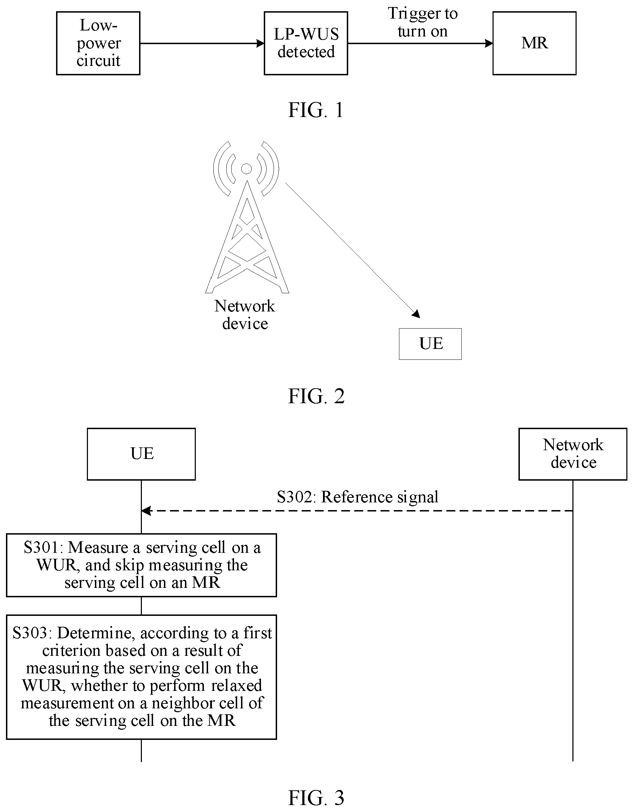

FIG. 1 is a diagram of an operating mode of a circuit A and an MR. In FIG. 1, an example in which the circuit A is a low-power circuit is used. After a UE operates on the low-power circuit, if the UE detects an LP-WUS, the UE may trigger to turn on the MR to receive paging, initiate random access, or the like; or if the UE detects no LP-WUS, the UE does not need to trigger to turn on the MR, and the MR may continue to be in an off state (or continue to be in a sleep state), so that operating time of the MR can be reduced, and power consumption of the UE is reduced.

In 5G NR, the UE in an RRC idle state or an RRC inactive state can perform radio resource management (radio resource management, RRM) measurement on a serving cell (serving cell) and a neighbor cell (neighbor cell). Measurement on the neighbor cell further includes one or more of intra-frequency (intra-frequency) measurement, inter-frequency (inter-frequency) measurement, or inter-RAT (inter-RAT) measurement. Currently, a measurement requirement is defined in a standard. For example, the UE needs to perform measurement at least once at an interval of T. During measurement, the UE needs to measure the serving cell, and may measure the neighbor cell according to a criterion S configured by a base station. A manner in which the UE measures the neighbor cell according to the criterion S is as follows: The UE needs to measure to-be-measured frequencies whose priorities each are higher than that of a frequency of the serving cell. For to-be-measured frequencies whose priorities each are equal to or lower than that of the frequency of the current serving cell, if a current measurement result of the serving cell is higher than a threshold corresponding to the criterion S, the UE does not need to measure the to-be-measured frequencies; or if the current measurement result of the serving cell is lower than or equal to the threshold corresponding to the criterion S, the UE needs to measure the to-be-measured frequencies. If the UE needs to measure the neighbor cell, the UE may further determine, based on a relaxation condition configured by the base station, whether to perform relaxed measurement on the neighbor cell, so as to reduce power consumption of the UE.

After a WUR is introduced, the UE may receive a reference signal on the WUR, where the reference signal is, for example, an LP-SS. The reference signal may be used by the UE to measure the serving cell. Similar to the LP-WUS signal, some simple modulation schemes such as OOK are usually used for the LP-SS. In addition, it can be learned from the foregoing content that the UE may also receive a reference signal and perform measurement on the MR. In this operating mechanism, how to reduce the power consumption of the UE is a problem that needs to be resolved.

In view of this, in embodiments of this application, the serving cell may be measured on the WUR, and the serving cell is not measured on the MR, so that power consumption caused by measuring the serving cell on the MR is reduced. In addition, it may be further determined, according to a first criterion based on a result of measuring the serving cell on the WUR, whether to perform relaxed measurement on the neighbor cell on the MR. If relaxed measurement is performed on the neighbor cell on the MR, measurement power consumption on the MR can be further reduced, thereby reducing device power consumption to a large extent.

The technical solutions provided in embodiments of this application may be applied to a 4G system, for example, a long term evolution (long term evolution, LTE) system, or may be applied to a 5G system, for example, a new radio (new radio, NR) system, or may be applied to a next generation mobile communication system or another similar communication system, for example, a 6G system. This is not specifically limited. In addition, the technical solutions provided in embodiments of this application may also be applied to a D2D scenario, for example, an NR-D2D scenario, or may be applied to a V2X scenario, for example, an NR-V2X scenario. For example, embodiments of this application may be applied in fields such as factory manufacturing, house-wide intelligence, intelligent driving, assisted driving, intelligent connected vehicles, or indoor commercial scenarios.

FIG. 2 is a diagram of an application scenario according to an embodiment of this application. FIG. 2 includes a UE and a network device. The network device may include an access network device and/or a core network device. For example, the network device may send a reference signal, and the UE may receive and measure the reference signal.

The following describes, with reference to the accompanying drawings, methods provided in embodiments of this application. In embodiments of this application, a main circuit (main radio, MR) may also be referred to as a main receiver (main receiver, MR), or may have another name. The following uses the MR as an example for description. It may be understood as that the following MR may be a main radio or a main receiver. In embodiments of this application, a wake up radio (wake up radio, WUR) may also be referred to as a wake up receiver (wake up receiver, WUR), a wake up circuit, a low-power circuit (low-power radio, LR), a wake up receiver module, or the like, or may have another name. The following uses the WUR as an example for description. It may be understood as that the following WUR may be a wake up radio or a wake up receiver, and the following WUR may also be replaced with a wake up circuit, a low-power circuit, a wake up receiver module, or the like. In embodiments of this application, a serving cell may be measured on the WUR in a non-relaxed measurement manner (or described as a manner of non-relaxed measurement). In embodiments of this application, measurement on a neighbor cell may include one or more of intra-frequency measurement, inter-frequency measurement, or inter-RAT measurement. Alternatively, it is understood as that the neighbor cell described in embodiments of this application may include one or more of an intra-frequency neighbor cell, an inter-frequency neighbor cell, or an inter-RAT neighbor cell. The intra-frequency neighbor cell means that a frequency of the neighbor cell is the same as a frequency of the serving cell of the UE. The inter-frequency neighbor cell means that a frequency of the neighbor cell is different from the frequency of the serving cell of the UE. The inter-RAT neighbor cell means that a radio access technology (radio access technology, RAT) corresponding to the neighbor cell is different from a RAT corresponding to the serving cell of the UE.

Embodiments of this specification may be applied to a network architecture shown in FIG. 2. For example, the UE described in embodiments of this specification may be the UE in FIG. 2, and the network device described in embodiments of this specification may be the network device in FIG. 2.

An embodiment of this application provides a communication method. FIG. 3 is a flowchart of the method.

S301: A UE measures a serving cell on a WUR, and skips measuring the serving cell on an MR.

Performing measurement on the WUR may also be replaced with performing measurement through the WUR, performing measurement based on an OOK-modulated signal, or performing measurement by measuring the OOK-modulated signal. Performing measurement on the MR may also be replaced with performing measurement through the MR, performing measurement based on an NR synchronization signal and physical broadcast channel (physical broadcast channel, PBCH) block (synchronization signal/PBCH block, SSB) and/or a channel state information reference signal (channel state information reference signal, CSI-RS), or performing measurement by measuring the NR SSB and/or the CSI-RS.

Optionally, a network device may send a reference signal (refer to S302 in FIG. 3). For example, this step is performed before S301. The reference signal includes, for example, an LP-SS. The WUR in the UE may receive the reference signal, and may measure the serving cell of the UE based on the reference signal. Optionally, the reference signal may further include an SSB, a CSI-RS, and/or the like. The MR in the UE may receive the reference signal, for example, the SSB and/or the CSI-RS. For example, the UE may measure a neighbor cell of the serving cell based on the SSB, the CSI-RS, and/or the like received by the MR. This is described below.

It can be learned that, in this embodiment of this application, the serving cell may be measured on the WUR, instead of being measured on the MR. Power consumption of the WUR is less than power consumption of the MR. Therefore, power consumption of the UE can be reduced.

S303: The UE determines, according to a first criterion based on a result of measuring the serving cell on the WUR, whether to perform relaxed measurement on the neighbor cell of the serving cell on the MR.

Optionally, that the UE performs relaxed measurement on the neighbor cell includes, for example, one or more of the following: The UE increases a measurement periodicity for the neighbor cell; the UE reduces a quantity of neighbor cells; or the UE reduces a quantity of to-be-measured frequencies. There may be one or more to-be-measured frequencies, and each frequency corresponds to one or more neighbor cells. Reducing the quantity of to-be-measured frequencies is equivalent to reducing a quantity of to-be-measured neighbor cells. Alternatively, in addition to this manner, the UE may further perform relaxed measurement in another manner. This is not limited herein. A manner in which the UE performs relaxed measurement on the neighbor cell may be set by the UE, may be preconfigured in the UE, may be configured by the network device, may be predefined in a protocol, or the like.

The result of measuring the serving cell on the WUR may also be replaced with a measurement result of the serving cell corresponding to the WUR, a measurement result of the serving cell based on the WUR, a measurement result of the serving cell obtained on the WUR, a measurement result of the serving cell obtained through the WUR, a measurement result of the serving cell obtained based on the WUR, a measurement result of the serving cell obtained based on an OOK-modulated signal, a measurement result of the serving cell obtained by measuring the OOK-modulated signal, or the like. A description manner is not limited. The following uses "the measurement result of the serving cell corresponding to the WUR" as an example for description. Optionally, a reference signal is received on the WUR from the serving cell, and a measurement result obtained by measuring the reference signal may be the measurement result of the serving cell corresponding to the WUR. For example, the measurement result of the serving cell corresponding to the WUR may include reference signal received power (reference signal received power, RSRP) of the serving cell corresponding to the WUR (which may also be replaced with RSRP obtained based on an OOK-modulated signal), and/or include reference signal received quality (reference signal received quality, RSRQ) of the serving cell corresponding to the WUR (which may also be replaced with RSRQ obtained based on the OOK-modulated signal). To distinguish from a measurement result on the MR (to be specific, a measurement result obtained based on the NR SSB and/or the CSI-RS), the measurement result corresponding to the WUR may be referred to as an LP measurement result. For example, the RSRP of the serving cell corresponding to the WUR may be referred to as LP-RSRP, and the RSRQ of the serving cell corresponding to the WUR may be referred to as LP-RSRQ.

In this embodiment of this application, the UE may not measure the serving cell on the MR, but the UE may fail to measure the neighbor cell of the serving cell on the WUR. Therefore, the UE may measure the neighbor cell on the MR. To reduce the power consumption of the UE, the UE may determine, according to the first criterion, whether relaxed measurement can be performed on the neighbor cell. The first criterion may also be referred to as a first condition, a first relaxation criterion, or the like. A name is not limited. The first criterion may be predefined in a protocol, or may be preconfigured in the UE, or may be configured by the network device. For example, if the first criterion is configured by the network device, the network device may send first indication information to indicate the first criterion, and the UE can determine the first criterion after receiving the first indication information.

Optionally, the first criterion includes that the measurement result of the serving cell corresponding to the WUR is greater than a first threshold, and/or includes that a variation of the measurement result of the serving cell corresponding to the WUR is less than a second threshold. For example, when the first criterion is that the measurement result of the serving cell corresponding to the WUR is greater than the first threshold, if the measurement result of the serving cell corresponding to the WUR is greater than the first threshold, it is considered that the first criterion is fulfilled; or if the measurement result of the serving cell corresponding to the WUR is less than or equal to the first threshold, it is considered that the first criterion is not fulfilled. Alternatively, when the first criterion is that the variation of the measurement result of the serving cell corresponding to the WUR is less than the second threshold, if the variation of the measurement result of the serving cell corresponding to the WUR is less than the second threshold, it is considered that the first criterion is fulfilled; or if the variation of the measurement result of the serving cell corresponding to the WUR is greater than or equal to the second threshold, it is considered that the first criterion is not fulfilled. Alternatively, when the first criterion is that the measurement result of the serving cell corresponding to the WUR is greater than the first threshold and the variation of the measurement result of the serving cell corresponding to the WUR is less than the second threshold, if the measurement result of the serving cell corresponding to the WUR is greater than the first threshold and the variation of the measurement result of the serving cell corresponding to the WUR is less than the second threshold, it is considered that the first criterion is fulfilled; or if the measurement result of the serving cell corresponding to the WUR is less than or equal to the first threshold and/or the variation of the measurement result of the serving cell corresponding to the WUR is greater than or equal to the second threshold, it is considered that the first criterion is not fulfilled. Because the first criterion is determined based on the measurement result of the serving cell corresponding to the WUR, the first threshold and/or the second threshold in the first criterion may be set based on the measurement result on the WUR.

Optionally, if the measurement result of the serving cell corresponding to the WUR fulfills the first criterion, the UE may perform relaxed measurement on the neighbor cell on the MR; or if the measurement result of the serving cell corresponding to the WUR does not fulfill the first criterion, the UE may perform non-relaxed measurement on the neighbor cell on the MR (or measure the neighbor cell in a conventional manner).

Alternatively, when the first criterion is that the measurement result of the serving cell corresponding to the WUR is greater than the first threshold, if the measurement result of the serving cell corresponding to the WUR is greater than the first threshold, the UE may perform relaxed measurement on the neighbor cell on the MR; or if the measurement result of the serving cell corresponding to the WUR is less than or equal to the first threshold, the UE may perform non-relaxed measurement on the neighbor cell on the MR.

Alternatively, when the first criterion is that the variation of the measurement result of the serving cell corresponding to the WUR is less than the second threshold, if the variation of the measurement result of the serving cell corresponding to the WUR is less than the second threshold, the UE may perform relaxed measurement on the neighbor cell on the MR; or if the variation of the measurement result of the serving cell corresponding to the WUR is greater than or equal to the second threshold, the UE may perform non-relaxed measurement on the neighbor cell on the MR.

Alternatively, when the first criterion is that the measurement result of the serving cell corresponding to the WUR is greater than the first threshold and the variation of the measurement result of the serving cell corresponding to the WUR is less than the second threshold, if the measurement result of the serving cell corresponding to the WUR is greater than the first threshold and the variation of the measurement result of the serving cell corresponding to the WUR is less than the second threshold, the UE may perform relaxed measurement on the neighbor cell on the MR; or if the measurement result of the serving cell corresponding to the WUR is less than or equal to the first threshold and/or the variation of the measurement result of the serving cell corresponding to the WUR is greater than or equal to the second threshold, the UE may perform non-relaxed measurement on the neighbor cell on the MR.

For example, if the measurement result of the serving cell corresponding to the WUR is greater than the first threshold, for example, the measurement result of the serving cell corresponding to the WUR is greater than the first threshold within a period of time, it may be considered that the UE may be located at a cell center. Therefore, the criterion included in the first criterion may also be referred to as a "relaxation criterion based on a location of the UE". The UE located at the cell center may not need to perform cell reselection or cell handover, or have a low probability of performing cell reselection or cell handover. Therefore, that the measurement result of the serving cell corresponding to the WUR is greater than the first threshold may be used as a relaxation criterion. When the relaxation criterion is fulfilled, the UE may correspondingly perform relaxed measurement on the neighbor cell. For another example, if the variation of the measurement result of the serving cell corresponding to the WUR is less than the second threshold, for example, the variation of the measurement result of the serving cell corresponding to the WUR is less than the second threshold within a period of time, it may be considered that the UE is in a static state or a low-speed moving state. Therefore, the criterion included in the first criterion may also be referred to as a "relaxation criterion based on a UE mobility state". The UE in the static state or the low-speed moving state may not need to perform cell reselection or cell handover, or have a low probability of performing cell reselection or cell handover. Therefore, that the variation of the measurement result of the serving cell corresponding to the WUR is less than the second threshold may be used as a relaxation criterion. When the relaxation criterion is fulfilled, the UE may correspondingly perform relaxed measurement on the neighbor cell.

In this embodiment of this application, a priority corresponding to a frequency of the neighbor cell of the serving cell may be higher than a priority corresponding to a frequency of the serving cell, or may be lower than or equal to the priority corresponding to the frequency of the serving cell. Neighbor cells of the serving cell may be classified into two types based on priorities of corresponding frequencies. A first-type neighbor cell includes a neighbor cell corresponding to a frequency whose priority is higher than the priority corresponding to the frequency of the serving cell, or it is understood as that a priority corresponding to a frequency of the first-type neighbor cell is higher than the priority corresponding to the frequency of the serving cell. A second-type neighbor cell includes a neighbor cell corresponding to a frequency whose priority is lower than or equal to the priority corresponding to the frequency of the serving cell, or it is understood as that a priority corresponding to a frequency of the second-type neighbor cell is lower than or equal to the priority corresponding to the frequency of the serving cell. In this case, that the UE determines, according to the first criterion based on the measurement result of the serving cell corresponding to the WUR, whether to perform relaxed measurement on the neighbor cell of the serving cell on the MR may include: The UE determines, according to the first criterion based on the measurement result of the serving cell corresponding to the WUR, whether to perform relaxed measurement on the first-type neighbor cell and/or the second-type neighbor cell of the serving cell on the MR. Optionally, a priority corresponding to a frequency is, for example, a cell reselection priority (cellReselectionPriority) corresponding to the frequency.

According to the foregoing solution, the UE may measure the serving cell on the WUR, and perform relaxed measurement on the neighbor cell on the MR, or perform non-relaxed measurement on the neighbor cell on the MR. That is, the UE measures the neighbor cell on the MR. Optionally, the UE may alternatively consider not measuring the neighbor cell on the MR, to further reduce the power consumption of the UE. The UE may not measure the neighbor cell on the WUR. In this case, in embodiments of this application, two expressions that the UE does not measure the neighbor cell on the MR and the UE does not measure the neighbor cell may express a same meaning, to be specific, both the expressions indicate that the UE does not measure the neighbor cell on either the MR or the WUR. Alternatively, the UE may measure the neighbor cell on the WUR. In this case, in embodiments of this application, that the UE does not measure the neighbor cell on the MR means that the UE does not measure the neighbor cell on the MR and may measure or not measure the neighbor cell on the WUR. That the UE does not measure the neighbor cell means that the UE does not measure the neighbor cell on either the MR or the WUR. Optionally, the UE may determine, according to a second criterion, whether to measure the neighbor cell. For example, the UE may determine, according to the second criterion based on the measurement result of the serving cell corresponding to the WUR, whether to measure the neighbor cell on the MR. If the neighbor cell needs to be measured on the MR, the UE may further determine, according to the first criterion based on the measurement result of the serving cell corresponding to the WUR, whether to perform relaxed measurement on the neighbor cell on the MR. The second criterion may also be referred to as a second condition or the like. A name is not limited. The second criterion may be predefined in a protocol, or may be preconfigured in the UE, or may be configured by the network device. For example, if the second criterion is configured by the network device, the network device may send third indication information to indicate the second criterion, and the UE can determine the second criterion after receiving the third indication information. Optionally, the third indication information and the first indication information indicating the first criterion may be same indication information, or may be different indication information. For example, a function of the second criterion is similar to a function of a criterion S, but content (for example, a ninth threshold to be described below) of the second criterion may be the same as or different from content (for example, a threshold in the criterion S) of the criterion S.

Optionally, the second criterion includes that the measurement result of the serving cell corresponding to the WUR is greater than the ninth threshold. For example, if the measurement result of the serving cell corresponding to the WUR is greater than the ninth threshold, it is considered that the second criterion is fulfilled; or if the measurement result of the serving cell corresponding to the WUR is less than or equal to the ninth threshold, it is considered that the second criterion is not fulfilled. Because the second criterion is determined based on the measurement result of the serving cell corresponding to the WUR, the ninth threshold in the second criterion may be set based on the measurement result on the WUR.

Optionally, if the measurement result of the serving cell corresponding to the WUR fulfills the second criterion, the UE may not measure the neighbor cell on the MR or not measure the neighbor cell; or if the measurement result of the serving cell corresponding to the WUR does not fulfill the second criterion, the UE may measure the neighbor cell on the MR.

Alternatively, for example, when the second criterion is that the measurement result of the serving cell corresponding to the WUR is greater than the ninth threshold, if the measurement result of the serving cell corresponding to the WUR is greater than the ninth threshold, the UE may not measure the neighbor cell on the MR or not measure the neighbor cell; or if the measurement result of the serving cell corresponding to the WUR is less than or equal to the ninth threshold, the UE may measure the neighbor cell on the MR.

In an application solution of the second criterion, different neighbor cells are not distinguished. For example, the first-type neighbor cell and the second-type neighbor cell are not distinguished, but are treated in a same manner. For example, according to the second criterion, if the UE does not measure the neighbor cell, the UE may not measure the first-type neighbor cell or the second-type neighbor cell; or if the UE does not measure the neighbor cell on the MR, the UE may not measure the first-type neighbor cell or the second-type neighbor cell on the MR. Alternatively, according to the second criterion, if the UE needs to measure the neighbor cell, the UE may measure the first-type neighbor cell and/or the second-type neighbor cell (where a specific type of neighbor cell to be measured may depend on specific neighbor cells that can be measured based on a measurement capability of the UE, and/or depend on specific neighbor cells that can be measured by the UE).

Alternatively, in the application solution of the second criterion, different neighbor cells may be treated differently.

For example, if the measurement result of the serving cell corresponding to the WUR fulfills the second criterion, the UE may not measure the second-type neighbor cell of the serving cell on the MR or not measure the second-type neighbor cell of the serving cell, but the UE may perform relaxed measurement on the first-type neighbor cell of the serving cell on the MR or perform non-relaxed measurement on the first-type neighbor cell of the serving cell on the MR. Whether to perform relaxed measurement or perform non-relaxed measurement may be determined by the UE, may be configured by the network device, may be predefined in a protocol, or the like. For example, when the network device indicates that relaxed measurement can be performed on the first-type neighbor cell, if the measurement result of the serving cell corresponding to the WUR fulfills the second criterion, the UE may perform relaxed measurement on the first-type neighbor cell of the serving cell on the MR. Alternatively, when the network device indicates that relaxed measurement is not performed on the first-type neighbor cell, if the measurement result of the serving cell corresponding to the WUR fulfills the second criterion, the UE may perform non-relaxed measurement on the first-type neighbor cell of the serving cell on the MR.

Alternatively, if the measurement result of the serving cell corresponding to the WUR does not fulfill the second criterion, the UE may determine, according to the first criterion based on the measurement result of the serving cell corresponding to the WUR, whether to perform relaxed measurement on the first-type neighbor cell and/or the second-type neighbor cell of the serving cell on the MR (where a specific type of neighbor cell to be measured may depend on specific neighbor cells that can be measured based on a measurement capability of the UE, and/or depend on specific neighbor cells that can be measured by the UE). For descriptions, refer to the foregoing content.

Alternatively, for example, when the second criterion is that the measurement result of the serving cell corresponding to the WUR is greater than the ninth threshold, if the measurement result of the serving cell corresponding to the WUR is greater than the ninth threshold, the UE may not measure the second-type neighbor cell of the serving cell on the MR or not measure the second-type neighbor cell of the serving cell, but may perform relaxed measurement on the first-type neighbor cell of the serving cell on the MR or perform non-relaxed measurement on the first-type neighbor cell of the serving cell on the MR; or if the measurement result of the serving cell corresponding to the WUR is less than or equal to the ninth threshold, the UE may determine, according to the first criterion based on the measurement result of the serving cell corresponding to the WUR, whether to perform relaxed measurement on the first-type neighbor cell and/or the second-type neighbor cell of the serving cell on the MR.

That is, for a neighbor cell corresponding to a frequency with a high priority, even if the measurement result of the serving cell corresponding to the WUR fulfills the second criterion or even if the measurement result of the serving cell corresponding to the WUR is greater than the ninth threshold, the UE may perform measurement, so that the UE can reselect or be handed over to a cell corresponding to a frequency with a high priority as much as possible.

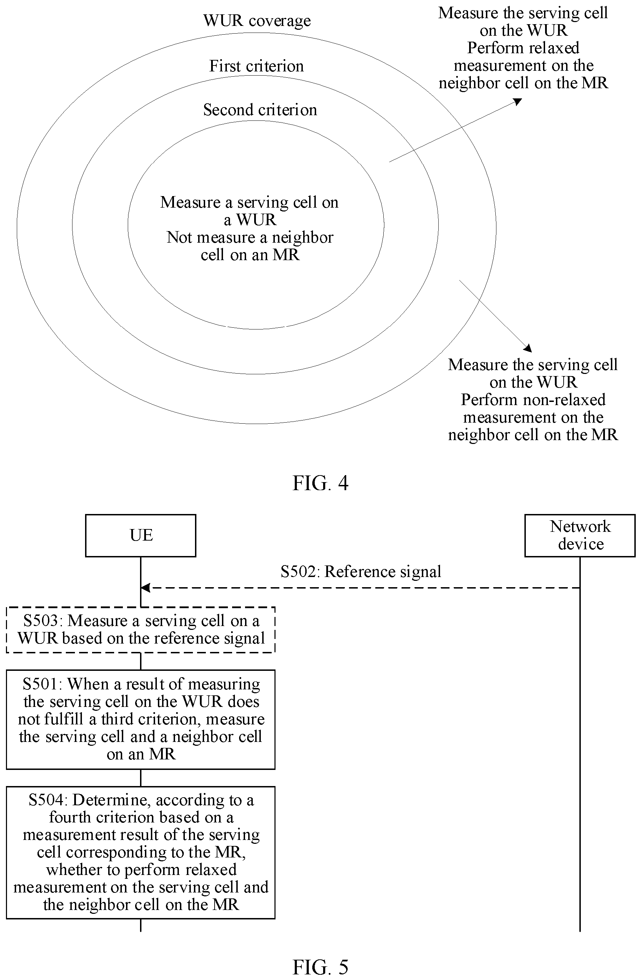

For example, FIG. 4 is a diagram of a solution according to an embodiment of this application. In FIG. 4, an example in which the second criterion and the first criterion are applied in this embodiment of this application is used. In addition, in FIG. 4, an example in which neighbor cells are not distinguished based on types is used. For example, the first-type neighbor cell and the second-type neighbor cell are not distinguished. In FIG. 4, an innermost circle corresponds to the second criterion, being within the circle is considered as that the second criterion is fulfilled, and being outside the circle is considered as that the second criterion is not fulfilled; a middle circle corresponds to the first criterion, being within the circle is considered that the first criterion is fulfilled, and being outside the circle is considered that the first criterion is not fulfilled; and an outermost circle represents a coverage area of the WUR, for example, an area in which the WUR can receive or decode one or more of an LP-WUS, an LP-SS, or an OOK-modulated signal. For example, if the measurement result of the serving cell corresponding to the WUR fulfills the second criterion, that is, is located within the innermost circle, the UE may not measure the neighbor cell or not measure the neighbor cell on the MR; or if the measurement result of the serving cell corresponding to the WUR does not fulfill the second criterion but fulfills the first criterion, that is, is located between the innermost circle and the middle circle, the UE may perform relaxed measurement on the neighbor cell on the MR; or if the measurement result of the serving cell corresponding to the WUR does not fulfill the first criterion (where it is clear that the measurement result does not fulfill the second criterion either), that is, is located outside the middle circle (for example, located outside the middle circle and within the outermost circle), the UE may perform non-relaxed measurement on the neighbor cell on the MR. Regardless of whether the second criterion is fulfilled and regardless of whether the first criterion is fulfilled, the UE may measure the serving cell on the WUR. In this embodiment of this application, the measurement result of the serving cell corresponding to the WUR may be used by the UE to perform cell reselection, cell handover, or the like.

Optionally, in this embodiment of this application, that the UE measures the serving cell on the WUR or the UE monitors or detects a reference signal on the WUR may be a function of the UE. The function may be activated (or turned on, or configured, or enabled (enabled)) by default, or the function may be enabled or disabled (disabled). This is flexible. For example, the network device may send second indication information to the UE, where the second indication information may indicate whether to enable (or activate, or turn on, or configure) the WUR or an LP-WUS on the WUR. After receiving the second indication information, the UE may perform the solution provided in this embodiment of this application. However, if the UE does not receive the second indication information or the second indication information indicates not to enable (or indicates to deactivate, turn off, disable, or release) the WUR or the LP-WUS on the WUR, the UE may not perform the solution provided in this embodiment of this application. For example, the UE may exit the WUR and return to the MR, and perform an RRM measurement action in a conventional manner. That monitoring of the WUR or the LP-WUS is enabled may also be referred to as that monitoring of the WUR or the LP-WUS is configured; monitoring of the WUR or the LP-WUS is used; monitoring of the WUR or the LP-WUS is turned on; the UE is monitoring the WUR or the LP-WUS; the UE is in an LP-WUS monitoring period (monitoring period); the UE is in an LP-WUS monitoring periodicity (monitoring periodicity); and so on. Optionally, when the WUR or the LP-WUS is configured for the UE and a specific condition is fulfilled (for example, signal quality of the WUR is good), monitoring of the WUR or the LP-WUS may be enabled.

In conclusion, in this embodiment of this application, the UE may measure the serving cell on the WUR, and not measure the serving cell on the MR, so that power consumption caused by measuring the serving cell on the MR is reduced. In addition, the UE may further determine, according to the first criterion based on the measurement result of the serving cell corresponding to the WUR, whether to perform relaxed measurement on the neighbor cell on the MR. If relaxed measurement is performed on the neighbor cell on the MR, measurement power consumption on the MR can be further reduced, thereby reducing device power consumption to a large extent.

An embodiment of this application provides another communication method. FIG. 5 is a flowchart of the method. In the embodiment shown in FIG. 3, the UE does not measure the serving cell on the MR. However, in the embodiment shown in FIG. 5, a UE may measure a serving cell on an MR in a specific case, to improve measurement accuracy.

S501: When a result of measuring the serving cell on a WUR does not fulfill a third criterion, the UE measures the serving cell of the UE and a neighbor cell of the serving cell on the MR.

Performing measurement on the WUR may also be replaced with performing measurement through the WUR, performing measurement based on an OOK-modulated signal, or performing measurement by measuring the OOK-modulated signal. Performing measurement on the MR may also be replaced with performing measurement through the MR, performing measurement based on an NR SSB and/or a CSI-RS, or performing measurement by measuring the NR SSB and/or the CSI-RS.

Optionally, a network device may send a reference signal (refer to S502 in FIG. 5), and the reference signal includes, for example, an LP-SS. The WUR in the UE may receive the reference signal, and may measure the serving cell of the UE based on the reference signal. Refer to S503 in FIG. 5. For example, S502 and S503 are performed before S501. Optionally, the reference signal may further include an SSB, a CSI-RS, and/or the like. The MR in the UE may receive the reference signal, for example, the SSB and/or the CSI-RS. For example, in S501, the UE may measure the serving cell of the UE and the neighbor cell based on the SSB, the CSI-RS, and/or the like received by the MR.

Optionally, in S503, the UE may measure the serving cell on the WUR, but may skip measuring the serving cell on the MR. Power consumption of the WUR is less than power consumption of the MR. Therefore, power consumption of the UE can be reduced.

For a concept of the result of measuring the serving cell on the WUR, refer to related descriptions in the embodiment shown in FIG. 3. In this embodiment of this application, an example of descriptions of a measurement result of the serving cell corresponding to the WUR is also used. The UE may obtain, in S503 through measurement, the measurement result of the serving cell corresponding to the WUR, and the UE may determine whether the measurement result fulfills the third criterion, or determine, according to the third criterion based on the measurement result, whether to measure the serving cell and the neighbor cell on the MR. If the UE determines, according to the third criterion, not to measure the serving cell or the neighbor cell on the MR, the power consumption of the UE may be reduced to a large extent.

The third criterion may also be referred to as a third condition or the like. A name is not limited. The third criterion may be predefined in a protocol, or may be preconfigured in the UE, or may be configured by the network device. For example, if the third criterion is configured by the network device, the network device may send third indication information to indicate the third criterion, and the UE can determine the third criterion after receiving the third indication information. For example, a function of the third criterion is similar to a function of a criterion S, but content (for example, a tenth threshold to be described below) of the third criterion may be the same as or different from content (for example, a threshold in the criterion S) of the criterion S.

Optionally, the third criterion includes that the measurement result of the serving cell corresponding to the WUR is greater than the tenth threshold. The tenth threshold may be the same as or different from the ninth threshold in the embodiment shown in FIG. 3. For example, if the measurement result of the serving cell corresponding to the WUR is greater than the tenth threshold, it is considered that the third criterion is fulfilled; or if the measurement result of the serving cell corresponding to the WUR is less than or equal to the tenth threshold, it is considered that the third criterion is not fulfilled. Because the third criterion is determined based on the measurement result of the serving cell corresponding to the WUR, the tenth threshold in the third criterion may be set based on the measurement result on the WUR.

Optionally, if the measurement result of the serving cell corresponding to the WUR fulfills the third criterion, the UE may not measure the serving cell on the MR and not measure the neighbor cell on the MR, or the UE may not measure the serving cell on the MR and not measure the neighbor cell on the MR, or the UE may not measure the serving cell on the MR and not measure the neighbor cell; or if the measurement result of the serving cell corresponding to the WUR does not fulfill the third criterion, the UE may measure the serving cell on the MR and measure the neighbor cell on the MR.

Alternatively, for example, when the third criterion is that the measurement result of the serving cell corresponding to the WUR is greater than the tenth threshold, if the measurement result of the serving cell corresponding to the WUR is greater than the tenth threshold, the UE may not measure the serving cell or the neighbor cell on the MR, or the UE may not measure the serving cell on the MR and not measure the neighbor cell on the MR, or the UE may not measure the serving cell on the MR and not measure the neighbor cell; or if the measurement result of the serving cell corresponding to the WUR is less than or equal to the tenth threshold, the UE may measure the serving cell on the MR and measure the neighbor cell on the MR.

In an application solution of the third criterion, different neighbor cells are not distinguished. For example, a first-type neighbor cell and a second-type neighbor cell are not distinguished, but are treated in a same manner. For example, according to the third criterion, if the UE does not measure the neighbor cell, the UE may not measure the first-type neighbor cell or the second-type neighbor cell; or if the UE does not measure the neighbor cell on the MR, the UE may not measure the first-type neighbor cell or the second-type neighbor cell on the MR. Alternatively, according to the third criterion, if the UE needs to measure the neighbor cell, the UE may measure the first-type neighbor cell and/or the second-type neighbor cell (where a specific type of neighbor cell to be measured or not measured may depend on specific neighbor cells that can be measured based on a measurement capability of the UE, and/or depend on specific neighbor cells that can be measured by the UE). For features such as the first-type neighbor cell and the second-type neighbor cell, refer to related descriptions in the embodiment shown in FIG. 3.

Alternatively, in the application solution of the third criterion, different neighbor cells may be treated differently.

For example, if the measurement result of the serving cell corresponding to the WUR fulfills the third criterion, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR. It may be understood as that a priority corresponding to a frequency of the second-type neighbor cell is lower than or equal to a priority corresponding to a frequency of the serving cell, and a priority corresponding to a frequency of the first-type neighbor cell is higher than the priority corresponding to the frequency of the serving cell. Therefore, if the measurement result of the serving cell corresponding to the WUR fulfills the third criterion, the second-type neighbor cell may not be measured or not be measured on the MR, but the first-type neighbor cell has a high priority or importance, and the UE may still keep performing measurement, so that the UE can perform cell reselection, cell handover, or the like based on a measurement result. In addition, in this embodiment of this application, a result of measuring the serving cell on the MR may be used by the UE to perform cell reselection, cell handover, or the like. Therefore, even if the measurement result of the serving cell corresponding to the WUR fulfills the third criterion, the UE may also perform relaxed measurement on the serving cell on the MR. However, because the measurement result of the serving cell corresponding to the WUR fulfills the third criterion, for example, it indicates that signal quality of the serving cell is good and a probability that the UE performs cell reselection or cell handover is low, the UE may perform relaxed measurement on the serving cell and the first-type neighbor cell on the MR, to reduce the power consumption of the UE as much as possible.

Alternatively, if the measurement result of the serving cell corresponding to the WUR does not fulfill the third criterion, the UE may measure the serving cell and the first-type neighbor cell and/or the second-type neighbor cell of the serving cell on the MR (where a specific type of neighbor cell to be measured may depend on specific neighbor cells that can be measured based on a measurement capability of the UE, and/or depend on specific neighbor cells that can be measured by the UE).

Alternatively, for example, when the third criterion is that the measurement result of the serving cell corresponding to the WUR is greater than the tenth threshold, if the measurement result of the serving cell corresponding to the WUR is greater than the tenth threshold, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR; or if the measurement result of the serving cell corresponding to the WUR is less than or equal to the tenth threshold, the UE may measure the serving cell and the first-type neighbor cell and/or the second-type neighbor cell of the serving cell on the MR.

That is, for the serving cell and a neighbor cell corresponding to a frequency with a high priority, even if the measurement result of the serving cell corresponding to the WUR fulfills the third criterion or even if the measurement result of the serving cell corresponding to the WUR is greater than the tenth threshold, the UE may perform measurement, so that the UE can reselect or be handed over to a cell corresponding to a frequency with a high priority as much as possible.

The result of measuring the serving cell on the MR in the foregoing content may also be replaced with a measurement result of the serving cell corresponding to the MR, a measurement result of the serving cell based on the MR, a measurement result of the serving cell obtained on the MR, a measurement result of the serving cell obtained through the MR, a measurement result of the serving cell obtained based on the MR, a measurement result of the serving cell obtained based on the SSB and/or the CSI-RS, a measurement result of the serving cell obtained by measuring the SSB and/or the CSI-RS, or the like. A description manner is not limited. The following uses "the measurement result of the serving cell corresponding to the MR" as an example for description. Optionally, a reference signal is received on the MR from the serving cell, and a measurement result obtained by measuring the reference signal may be the measurement result of the serving cell corresponding to the MR. For example, the measurement result of the serving cell corresponding to the MR may include RSRP of the serving cell corresponding to the MR, and/or include RSRQ of the serving cell corresponding to the MR. The measurement result of the serving cell corresponding to the MR is, for example, obtained through measurement by the UE based on the SSB received by the MR. Therefore, to distinguish from the measurement result on the WUR, the measurement result corresponding to the MR may be referred to as a synchronization signal (synchronization signal, SS) measurement result. For example, the RSRP of the serving cell corresponding to the MR may be referred to as SS-RSRP (or may be replaced with RSRP obtained based on the SSB and/or the CSI-RS), and the RSRQ of the serving cell corresponding to the MR may be referred to as SS-RSRQ (or may be replaced with RSRQ obtained based on the SSB and/or the CSI-RS).

Optionally, that the UE performs relaxed measurement on the serving cell and the neighbor cell (for example, the first-type neighbor cell and/or the second-type neighbor cell) includes, for example, one or more of the following: The UE increases a measurement periodicity for the serving cell; the UE increases a measurement periodicity for the neighbor cell; the UE reduces a quantity of neighbor cells; or the UE reduces a quantity of to-be-measured frequencies. There may be one or more to-be-measured frequencies, and each frequency corresponds to one or more neighbor cells. Reducing the quantity of to-be-measured frequencies is equivalent to reducing a quantity of to-be-measured neighbor cells. For example, an initial measurement periodicity for the serving cell may be the same as an initial measurement periodicity for the neighbor cell, and an increased measurement periodicity for the serving cell may be the same as or different from an increased measurement periodicity for the neighbor cell. Alternatively, the initial measurement periodicity for the serving cell may be different from the initial measurement periodicity for the neighbor cell, and the increased measurement periodicity for the serving cell may be the same as or different from the increased measurement periodicity for the neighbor cell. Alternatively, in addition to this manner, the UE may further perform relaxed measurement in another manner. This is not limited herein. A manner in which the UE performs relaxed measurement on the serving cell and the neighbor cell may be set by the UE, may be preconfigured in the UE, may be configured by the network device, may be predefined in a protocol, or the like.

S504: The UE determines, according to a fourth criterion based on the measurement result of the serving cell corresponding to the MR, whether to perform relaxed measurement on the serving cell and the neighbor cell on the MR.

In this embodiment of this application, to reduce the power consumption of the UE, the UE may determine, according to the fourth criterion, whether relaxed measurement can be performed on the serving cell and the neighbor cell. For example, if the measurement result of the serving cell corresponding to the WUR fulfills the third criterion, the UE may not measure the serving cell or the neighbor cell on the MR, may not measure the serving cell on the MR and not measure the neighbor cell, or may not measure the serving cell on the MR and not measure the neighbor cell on the MR; or if the measurement result of the serving cell corresponding to the WUR does not fulfill the third criterion, the UE may determine, according to the fourth criterion based on the measurement result of the serving cell corresponding to the MR, whether to perform relaxed measurement on the serving cell and the neighbor cell on the MR.

Alternatively, for example, when the third criterion is that the measurement result of the serving cell corresponding to the WUR is greater than the tenth threshold, if the measurement result of the serving cell corresponding to the WUR is greater than the tenth threshold, the UE may not measure the serving cell or the neighbor cell on the MR, may not measure the serving cell on the MR and not measure the neighbor cell on the MR, or may not measure the serving cell on the MR and not measure the neighbor cell; or if the measurement result of the serving cell corresponding to the WUR is less than or equal to the tenth threshold, the UE may determine, according to the fourth criterion based on the measurement result of the serving cell corresponding to the MR, whether to perform relaxed measurement on the serving cell and the neighbor cell on the MR.

Alternatively, when different types of neighbor cells are distinguished, if the measurement result of the serving cell corresponding to the WUR fulfills the third criterion, the UE may not measure the second-type neighbor cell on the MR and may perform relaxed measurement on the serving cell and the first-type neighbor cell on the MR, or the UE may not measure the second-type neighbor cell and may perform relaxed measurement on the serving cell and the first-type neighbor cell on the MR; or if the measurement result of the serving cell corresponding to the WUR does not fulfill the third criterion, the UE may determine, according to the fourth criterion based on the measurement result of the serving cell corresponding to the MR, whether to perform relaxed measurement on the serving cell and the first-type neighbor cell and/or the second-type neighbor cell on the MR.

Alternatively, when different types of neighbor cells are distinguished, for example, the third criterion is that the measurement result of the serving cell corresponding to the WUR is greater than the tenth threshold, if the measurement result of the serving cell corresponding to the WUR is greater than the tenth threshold, the UE may not measure the second-type neighbor cell on the MR and may perform relaxed measurement on the serving cell and the first-type neighbor cell on the MR, or the UE may not measure the second-type neighbor cell and may perform relaxed measurement on the serving cell and the first-type neighbor cell on the MR; or if the measurement result of the serving cell corresponding to the WUR is less than or equal to the tenth threshold, the UE may determine, according to the fourth criterion based on the measurement result of the serving cell corresponding to the MR, whether to perform relaxed measurement on the serving cell and the first-type neighbor cell and/or the second-type neighbor cell on the MR.

The fourth criterion may also be referred to as a fourth condition, a fourth relaxation criterion, or the like. A name is not limited. The fourth criterion may be predefined in a protocol, or may be preconfigured in the UE, or may be configured by the network device. For example, if the fourth criterion is configured by the network device, the network device may send first indication information to indicate the fourth criterion, and the UE can determine the fourth criterion after receiving the first indication information. Optionally, the first indication information and the third indication information indicating the third criterion may be same indication information, or may be different indication information.

Optionally, the fourth criterion includes that the measurement result of the serving cell corresponding to the MR is greater than a third threshold, and/or includes that a variation of the measurement result of the serving cell corresponding to the MR is less than a fourth threshold. In this embodiment of this application, because the UE has measured the serving cell on the MR when determining the fourth criterion, the fourth criterion can be determined by using the measurement result of the serving cell corresponding to the MR. Generally, accuracy of the measurement result on the MR is high, and determining based on the measurement result corresponding to the MR can improve determining accuracy. The third threshold may be the same as or different from the first threshold in the embodiment shown in FIG. 3. The fourth threshold may be the same as or different from the second threshold in the embodiment shown in FIG. 3.

For example, when the fourth criterion is that the measurement result of the serving cell corresponding to the MR is greater than the third threshold, if the measurement result of the serving cell corresponding to the MR is greater than the third threshold, it is considered that the fourth criterion is fulfilled; or if the measurement result of the serving cell corresponding to the MR is less than or equal to the third threshold, it is considered that the fourth criterion is not fulfilled. Alternatively, when the fourth criterion is that the variation of the measurement result of the serving cell corresponding to the MR is less than the fourth threshold, if the variation of the measurement result of the serving cell corresponding to the MR is less than the fourth threshold, it is considered that the fourth criterion is fulfilled; or if the variation of the measurement result of the serving cell corresponding to the MR is greater than or equal to the fourth threshold, it is considered that the fourth criterion is not fulfilled. Alternatively, when the fourth criterion is that the measurement result of the serving cell corresponding to the MR is greater than the third threshold and the variation of the measurement result of the serving cell corresponding to the MR is less than the fourth threshold, if the measurement result of the serving cell corresponding to the MR is greater than the third threshold and the variation of the measurement result of the serving cell corresponding to the MR is less than the fourth threshold, it is considered that the fourth criterion is fulfilled; or if the measurement result of the serving cell corresponding to the MR is less than or equal to the third threshold and/or the variation of the measurement result of the serving cell corresponding to the MR is greater than or equal to the fourth threshold, it is considered that the fourth criterion is not fulfilled. Because the fourth criterion is determined based on the measurement result of the serving cell corresponding to the MR, the third threshold and/or the fourth threshold in the fourth criterion may be set based on the measurement result on the MR.

Optionally, if the measurement result of the serving cell corresponding to the MR fulfills the fourth criterion, the UE may perform relaxed measurement on the serving cell and the neighbor cell on the MR; or if the measurement result of the serving cell corresponding to the MR does not fulfill the fourth criterion, the UE may perform non-relaxed measurement on the serving cell and the neighbor cell on the MR (or measure the serving cell and the neighbor cell in a conventional manner).

Alternatively, when the fourth criterion is that the measurement result of the serving cell corresponding to the MR is greater than the third threshold, if the measurement result of the serving cell corresponding to the MR is greater than the third threshold, the UE may perform relaxed measurement on the serving cell and the neighbor cell on the MR; or if the measurement result of the serving cell corresponding to the MR is less than or equal to the third threshold, the UE may perform non-relaxed measurement on the serving cell and the neighbor cell on the MR.

Alternatively, when the fourth criterion is that the variation of the measurement result of the serving cell corresponding to the MR is less than the fourth threshold, if the variation of the measurement result of the serving cell corresponding to the MR is less than the fourth threshold, the UE may perform relaxed measurement on the serving cell and the neighbor cell on the MR; or if the variation of the measurement result of the serving cell corresponding to the MR is greater than or equal to the fourth threshold, the UE may perform non-relaxed measurement on the serving cell and the neighbor cell on the MR.

Alternatively, when the fourth criterion is that the measurement result of the serving cell corresponding to the MR is greater than the third threshold and the variation of the measurement result of the serving cell corresponding to the MR is less than the fourth threshold, if the measurement result of the serving cell corresponding to the MR is greater than the third threshold and the variation of the measurement result of the serving cell corresponding to the MR is less than the fourth threshold, the UE may perform relaxed measurement on the serving cell and the neighbor cell on the MR; or if the measurement result of the serving cell corresponding to the MR is less than or equal to the third threshold and/or the variation of the measurement result of the serving cell corresponding to the MR is greater than or equal to the fourth threshold, the UE may perform non-relaxed measurement on the serving cell and the neighbor cell on the MR.

For example, if the measurement result of the serving cell corresponding to the MR is greater than the third threshold, for example, the measurement result of the serving cell corresponding to the WUR is greater than the third threshold within a period of time, it may be considered that the UE may be located at a cell center. Therefore, the criterion included in the fourth criterion may also be referred to as a "relaxation criterion based on a location of the UE". The UE located at the cell center may not need to perform cell reselection or cell handover, or have a low probability of performing cell reselection or cell handover. Therefore, that the measurement result of the serving cell corresponding to the MR is greater than the third threshold may be used as a relaxation criterion. When the relaxation criterion is fulfilled, the UE may correspondingly perform relaxed measurement on the serving cell and the neighbor cell. For another example, if the variation of the measurement result of the serving cell corresponding to the MR is less than the fourth threshold, for example, the variation of the measurement result of the serving cell corresponding to the MR is less than the fourth threshold within a period of time, it may be considered that the UE is in a static state or a low-speed moving state. Therefore, the criterion included in the fourth criterion may also be referred to as a "relaxation criterion based on a UE mobility state". The UE in the static state or the low-speed moving state may not need to perform cell reselection or cell handover, or have a low probability of performing cell reselection or cell handover. Therefore, that the variation of the measurement result of the serving cell corresponding to the MR is less than the fourth threshold may be used as a relaxation criterion. When the relaxation criterion is fulfilled, the UE may correspondingly perform relaxed measurement on the serving cell and the neighbor cell.

In this embodiment of this application, neighbor cells of the serving cell may be classified into the first-type neighbor cell and the second-type neighbor cell. For this, refer to related descriptions of the embodiment shown in FIG. 3. In this case, that the UE determines, according to the fourth criterion based on the measurement result of the serving cell corresponding to the MR, whether to perform relaxed measurement on the serving cell and the neighbor cell on the MR may include: The UE determines, according to the fourth criterion based on the measurement result of the serving cell corresponding to the MR, whether to perform relaxed measurement on the serving cell and the first-type neighbor cell and/or the second-type neighbor cell of the serving cell on the MR (where a specific type of neighbor cell to be measured may depend on specific neighbor cells that can be measured based on a measurement capability of the UE, and/or depend on specific neighbor cells that can be measured by the UE). Optionally, a priority corresponding to a frequency is, for example, a cell reselection priority corresponding to the frequency.

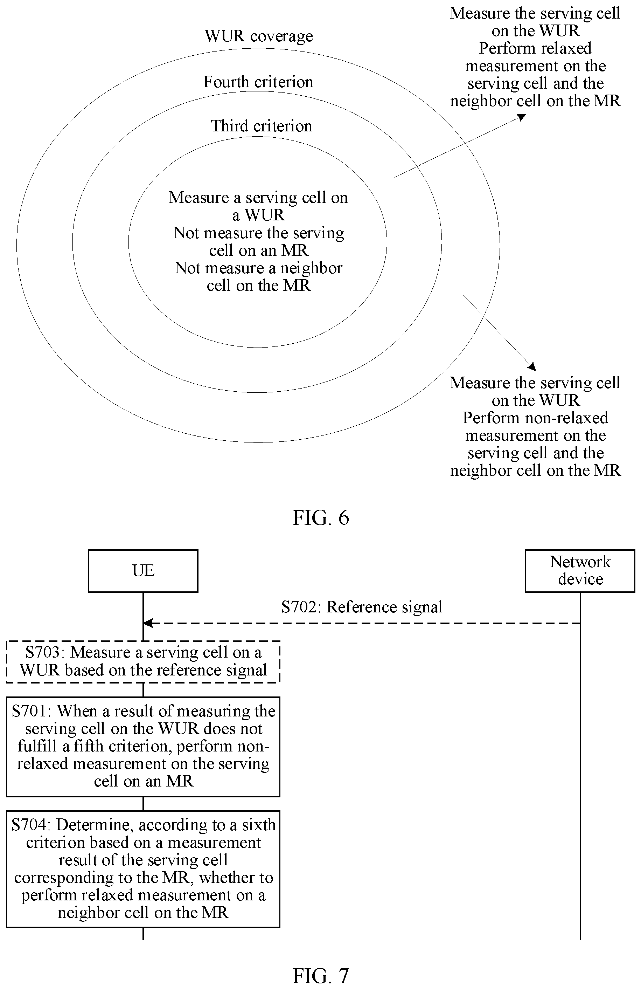

For example, FIG. 6 is a diagram of a solution according to an embodiment of this application. In FIG. 6, an example in which the third criterion and the fourth criterion are applied in this embodiment of this application is used. In addition, in FIG. 6, an example in which neighbor cells are not distinguished based on types is used. That is, the first-type neighbor cell and the second-type neighbor cell are not distinguished. In FIG. 6, an innermost circle corresponds to the third criterion, being within the circle is considered as that the third criterion is fulfilled, and being outside the circle is considered as that the third criterion is not fulfilled; a middle circle corresponds to the fourth criterion, being within the circle is considered that the fourth criterion is fulfilled, and being outside the circle is considered that the fourth criterion is not fulfilled; and an outermost circle represents a coverage area of the WUR, for example, an area in which the WUR can receive or decode one or more of an LP-WUS, an LP-SS, or an OOK-modulated signal. For example, if the measurement result of the serving cell corresponding to the MR fulfills the third criterion, that is, is located within the innermost circle, the UE may not measure the serving cell or the neighbor cell on the MR; or if the measurement result of the serving cell corresponding to the MR does not fulfill the third criterion but fulfills the fourth criterion, that is, is located between the innermost circle and the middle circle, the UE may perform relaxed measurement on the serving cell and the neighbor cell on the MR; or if the measurement result of the serving cell corresponding to the MR does not fulfill the fourth criterion (where it is clear that the measurement result does not fulfill the third criterion either), that is, is located outside the middle circle (for example, located outside the middle circle and within the outermost circle), the UE may perform non-relaxed measurement on the serving cell and the neighbor cell on the MR. Regardless of whether the third criterion is fulfilled and regardless of whether the fourth criterion is fulfilled, the UE may measure the serving cell on the WUR.

Optionally, in this embodiment of this application, that the UE measures the serving cell on the WUR or the UE monitors or detects a reference signal on the WUR may be a function of the UE. The function may be activated (or turned on, or configured, or enabled) by default, or the function may be enabled or disabled (disabled). This is flexible. For how to enable the function, related descriptions of the function, and the like, refer to related content in the embodiment shown in FIG. 3.

In conclusion, in this embodiment of this application, the UE may measure the serving cell on the WUR, and may not measure the serving cell on the MR when a specific condition is fulfilled, so that power consumption caused by measuring the serving cell on the MR is reduced. In addition, the UE may further determine, according to the fourth criterion based on the measurement result of the serving cell corresponding to the WUR, whether to perform relaxed measurement on the serving cell and the neighbor cell on the MR. If relaxed measurement is performed on the serving cell and the neighbor cell on the MR, measurement power consumption on the MR can be further reduced, thereby reducing device power consumption to a large extent.

An embodiment of this application provides still another communication method. FIG. 7 is a flowchart of the method. In the embodiment shown in FIG. 3, the UE does not measure the serving cell on the MR. However, in the embodiment shown in FIG. 7, a UE may measure a serving cell on an MR in a specific case, to improve measurement accuracy. In addition, in the embodiment shown in FIG. 5, measurement actions of the UE on the serving cell and the neighbor cell (or the first-type neighbor cell) may be consistent, for example, both the serving cell and the neighbor cell are measured, neither the serving cell nor the neighbor cell is measured, or relaxed measurement is performed on both the serving cell and the neighbor cell, or non-relaxed measurement is performed on both the serving cell and the neighbor cell. However, in the embodiment shown in FIG. 7, measurement actions of the UE on the serving cell and a neighbor cell (or a first-type neighbor cell) may alternatively be different, so that the measurement actions of the UE are more reasonable, and power consumption is reduced when the measurement actions on the serving cell and the neighbor cell are different. For example, the UE may perform relaxed measurement on the neighbor cell when the UE does not perform relaxed measurement on the serving cell; the UE may not measure the neighbor cell when the UE performs relaxed measurement on the serving cell; and so on. In this way, a quantity of times or a frequency of measuring the neighbor cell is reduced, so that power consumption of the UE can be reduced.

S701: When a result of measuring the serving cell on a WUR does not fulfill a fifth criterion, the UE performs non-relaxed measurement on the serving cell of the UE on the MR.

Performing measurement on the WUR may also be replaced with performing measurement through the WUR, performing measurement based on an OOK-modulated signal, or performing measurement by measuring the OOK-modulated signal. Performing measurement on the MR may also be replaced with performing measurement through the MR, performing measurement based on an NR SSB and/or a CSI-RS, or performing measurement by measuring the NR SSB and/or the CSI-RS.

Optionally, a network device may send a reference signal (refer to S702 in FIG. 7), and the reference signal includes, for example, an LP-SS. The WUR in the UE may receive the reference signal, and may measure the serving cell of the UE based on the reference signal. Refer to S703 in FIG. 7. For example, S702 and S703 are performed before S701. Optionally, the reference signal may further include an SSB, a CSI-RS, and/or the like. The MR in the UE may receive the reference signal, for example, the SSB and/or the CSI-RS. For example, in S701, the UE may measure the serving cell of the UE and the neighbor cell based on the SSB, the CSI-RS, and/or the like received by the MR.

Optionally, in S703, the UE may measure the serving cell on the WUR, but may skip measuring the serving cell on the MR. Power consumption of the WUR is less than power consumption of the MR. Therefore, power consumption of the UE can be reduced.

For descriptions of a concept of the result of measuring the serving cell on the WUR, refer to related descriptions in the embodiment shown in FIG. 3. In this embodiment of this application, an example of descriptions of "a measurement result of the serving cell corresponding to the WUR" is used. The UE may obtain, in S703 through measurement, the measurement result of the serving cell corresponding to the WUR, and the UE may determine whether the measurement result fulfills the fifth criterion, or determine, according to the fifth criterion based on the measurement result, how to measure the serving cell on the MR or whether to measure the serving cell on the MR. The fifth criterion may be used for determining whether to perform relaxed measurement on the serving cell on the MR. Therefore, the fifth criterion may be considered as a relaxation criterion. For example, the fifth criterion may also be referred to as a fifth condition or a fifth relaxation criterion. A name is not limited. The fifth criterion may be predefined in a protocol, or may be preconfigured in the UE, or may be configured by the network device. For example, if the fifth criterion is configured by the network device, the network device may send third indication information to indicate the fifth criterion, and the UE can determine the fifth criterion after receiving the third indication information.

Optionally, the fifth criterion includes that the measurement result of the serving cell corresponding to the WUR is greater than a fifth threshold, and/or includes that a variation of the measurement result of the serving cell corresponding to the WUR is less than a sixth threshold. In this embodiment of this application, because the UE has measured the serving cell on the WUR but may not measure the serving cell on the MR yet when determining the fifth criterion, whether the fifth criterion is fulfilled may be determined by using the measurement result of the serving cell corresponding to the WUR.

For example, when the fifth criterion is that the measurement result of the serving cell corresponding to the WUR is greater than the fifth threshold, if the measurement result of the serving cell corresponding to the WUR is greater than the fifth threshold, it is considered that the fifth criterion is fulfilled; or if the measurement result of the serving cell corresponding to the WUR is less than or equal to the fifth threshold, it is considered that the fifth criterion is not fulfilled. Alternatively, when the fifth criterion is that the variation of the measurement result of the serving cell corresponding to the WUR is less than the sixth threshold, if the variation of the measurement result of the serving cell corresponding to the WUR is less than the sixth threshold, it is considered that the fifth criterion is fulfilled; or if the variation of the measurement result of the serving cell corresponding to the WUR is greater than or equal to the sixth threshold, it is considered that the fifth criterion is not fulfilled. Alternatively, when the fifth criterion is that the measurement result of the serving cell corresponding to the WUR is greater than the fifth threshold and the variation of the measurement result of the serving cell corresponding to the WUR is less than the sixth threshold, if the measurement result of the serving cell corresponding to the WUR is greater than the fifth threshold and the variation of the measurement result of the serving cell corresponding to the WUR is less than the sixth threshold, it is considered that the fifth criterion is fulfilled; or if the measurement result of the serving cell corresponding to the WUR is less than or equal to the fifth threshold and/or the variation of the measurement result of the serving cell corresponding to the WUR is greater than or equal to the sixth threshold, it is considered that the fifth criterion is not fulfilled. Because the fifth criterion is determined based on the measurement result of the serving cell corresponding to the WUR, the fifth threshold and/or the sixth threshold in the fifth criterion may be set based on the measurement result on the WUR.

Optionally, if the measurement result of the serving cell corresponding to the WUR fulfills the fifth criterion, the UE may perform relaxed measurement on the serving cell on the MR or not measure the serving cell on the MR, and may not measure the neighbor cell not or not measure the neighbor cell on the MR; or if the measurement result of the serving cell corresponding to the WUR does not fulfill the fifth criterion, the UE may perform non-relaxed measurement on the serving cell on the MR, and may performed relaxed measurement on the neighbor cell on the MR or perform non-relaxed measurement on the neighbor cell on the MR.

Alternatively, when the fifth criterion is that the measurement result of the serving cell corresponding to the WUR is greater than the fifth threshold, if the measurement result of the serving cell corresponding to the WUR is greater than the fifth threshold, the UE may perform relaxed measurement on the serving cell on the MR or not measure the serving cell on the MR, and may not measure the neighbor cell or not measure the neighbor cell on the MR; or if the measurement result of the serving cell corresponding to the WUR is less than or equal to the fifth threshold, the UE may perform non-relaxed measurement on the serving cell on the MR, and may perform relaxed measurement on the neighbor cell on the MR or perform non-relaxed measurement on the neighbor cell on the MR.

Alternatively, when the fifth criterion is that the variation of the measurement result of the serving cell corresponding to the WUR is less than the sixth threshold, if the variation of the measurement result of the serving cell corresponding to the WUR is less than the sixth threshold, the UE may perform relaxed measurement on the serving cell on the MR or not measure the serving cell on the MR, and may not measure the neighbor cell or not measure the neighbor cell on the MR; or if the variation of the measurement result of the serving cell corresponding to the WUR is greater than or equal to the sixth threshold, the UE may perform non-relaxed measurement on the serving cell on the MR, and may perform relaxed measurement on the neighbor cell on the MR or perform non-relaxed measurement on the neighbor cell on the MR.

Alternatively, when the fifth criterion is that the measurement result of the serving cell corresponding to the WUR is greater than the fifth threshold and the variation of the measurement result of the serving cell corresponding to the WUR is less than the sixth threshold, if the measurement result of the serving cell corresponding to the WUR is greater than the fifth threshold and the variation of the measurement result of the serving cell corresponding to the WUR is less than the sixth threshold, the UE may perform relaxed measurement on the serving cell on the MR or not measure the serving cell on the MR, and may not measure the neighbor cell or not measure the neighbor cell on the MR; or if the measurement result of the serving cell corresponding to the WUR is less than or equal to the fifth threshold and/or the variation of the measurement result of the serving cell corresponding to the WUR is greater than or equal to the sixth threshold, the UE may perform non-relaxed measurement on the serving cell on the MR, and may perform relaxed measurement on the neighbor cell on the MR or perform non-relaxed measurement on the neighbor cell on the MR.

For example, if the measurement result of the serving cell corresponding to the WUR is greater than the fifth threshold, for example, the measurement result of the serving cell corresponding to the WUR is greater than the fifth threshold within a period of time, it may be considered that the UE may be located at a cell center. Therefore, the criterion included in the fifth criterion may also be referred to as a "relaxation criterion based on a location of the UE". The UE located at the cell center may not need to perform cell reselection or cell handover, or have a low probability of performing cell reselection or cell handover. Therefore, that the measurement result of the serving cell corresponding to the WUR is greater than the fifth threshold may be used as a relaxation criterion. When the relaxation criterion is fulfilled, the UE may correspondingly perform relaxed measurement on the serving cell. For another example, if the variation of the measurement result of the serving cell corresponding to the WUR is less than the sixth threshold, for example, the variation of the measurement result of the serving cell corresponding to the WUR is less than the sixth threshold within a period of time, it may be considered that the UE is in a static state or a low-speed moving state. Therefore, the criterion included in the fifth criterion may also be referred to as a "relaxation criterion based on a UE mobility state". The UE in the static state or the low-speed moving state may not need to perform cell reselection or cell handover, or have a low probability of performing cell reselection or cell handover. Therefore, that the variation of the measurement result of the serving cell corresponding to the WUR is less than the sixth threshold may be used as a relaxation criterion. When the relaxation criterion is fulfilled, the UE may correspondingly perform relaxed measurement on the serving cell.

As described above, if the measurement result of the serving cell corresponding to the WUR fulfills the fifth criterion (or, for example, when the fifth criterion is that the measurement result of the serving cell corresponding to the WUR is greater than the fifth threshold, if the measurement result of the serving cell corresponding to the WUR is greater than the fifth threshold), the UE may perform relaxed measurement on the serving cell on the MR or not measure the serving cell on the MR. Whether the UE performs relaxed measurement on the serving cell on the MR or does not measure the serving cell on the MR may be decided by the UE, or may be configured by the network device, or may be predefined in a protocol. Alternatively, whether the UE performs relaxed measurement on the serving cell on the MR or does not measure the serving cell on the MR may be determined according to a seventh criterion based on the measurement result of the serving cell corresponding to the WUR.

For example, the seventh criterion includes that the measurement result of the serving cell corresponding to the WUR is greater than a seventh threshold, and/or includes that the variation of the measurement result of the serving cell corresponding to the WUR is less than an eighth threshold.

Optionally, the seventh threshold may be greater than the fifth threshold, and/or the eighth threshold may be less than the sixth threshold. That is, the seventh criterion may be a criterion that is stricter than the fifth criterion. For example, if the measurement result of the serving cell corresponding to the WUR fulfills the seventh criterion, the measurement result also fulfills the fifth criterion; or if the measurement result of the serving cell corresponding to the WUR does not fulfill the seventh criterion, the measurement result may fulfill the fifth criterion or may not fulfill the fifth criterion. If the seventh criterion is fulfilled, it may better indicate that the UE is located at the cell center, and/or indicate that the UE is in the static state or the low-speed moving state. In this case, a probability that the UE performs cell handover or cell reselection is low. Therefore, when the measurement result of the serving cell corresponding to the WUR fulfills the seventh criterion, the UE may not measure the serving cell on the MR, so that the power consumption of the UE can be reduced to a greater extent.

Optionally, if the measurement result of the serving cell corresponding to the WUR fulfills the fifth criterion and the seventh criterion, the UE does not measure the serving cell on the MR; or if the measurement result of the serving cell corresponding to the WUR fulfills the fifth criterion and does not fulfill the seventh criterion, the UE performs relaxed measurement on the serving cell on the MR. Alternatively, if it is considered that the measurement result of the serving cell corresponding to the WUR also fulfills the fifth criterion when the measurement result fulfills the seventh criterion, the foregoing solution may be replaced with the following: If the measurement result of the serving cell corresponding to the WUR fulfills the seventh criterion, the UE does not measure the serving cell on the MR; or if the measurement result of the serving cell corresponding to the WUR does not fulfill the seventh criterion, the UE performs relaxed measurement on the serving cell on the MR. When the seventh criterion is described below, an example in which the measurement result of the serving cell corresponding to the WUR also fulfills the fifth criterion when the measurement result fulfills the seventh criterion is used. That is, whether the measurement result of the serving cell corresponding to the WUR fulfills the fifth criterion is not emphasized.

Alternatively, for example, when the seventh criterion is that the measurement result of the serving cell corresponding to the WUR is greater than the seventh threshold, if the measurement result of the serving cell corresponding to the WUR is greater than the seventh threshold, the UE does not measure the serving cell on the MR; or if the measurement result of the serving cell corresponding to the WUR is less than or equal to the seventh threshold, the UE performs relaxed measurement on the serving cell on the MR.

Alternatively, for example, when the seventh criterion is that the variation of the measurement result of the serving cell corresponding to the WUR is less than the eighth threshold, if the variation of the measurement result of the serving cell corresponding to the WUR is less than the eighth threshold, the UE may not measure the serving cell on the MR; or if the variation of the measurement result of the serving cell corresponding to the WUR is greater than or equal to the eighth threshold, the UE may perform relaxed measurement on the serving cell on the MR.

Alternatively, for example, when the seventh criterion is that the measurement result of the serving cell corresponding to the WUR is greater than the seventh threshold and the variation of the measurement result of the serving cell corresponding to the WUR is less than the eighth threshold, if the measurement result of the serving cell corresponding to the WUR is greater than the seventh threshold and the variation of the measurement result of the serving cell corresponding to the WUR is less than the eighth threshold, the UE may not measure the serving cell on the MR; or if the measurement result of the serving cell corresponding to the WUR is less than or equal to the seventh threshold and/or the variation of the measurement result of the serving cell corresponding to the WUR is greater than or equal to the eighth threshold, the UE may perform relaxed measurement on the serving cell on the MR.

The third threshold is set, so that the measurement actions of the UE are clearer, and the measurement actions of the UE are more reasonable.

In an application solution of the fifth criterion, different neighbor cells are not distinguished. For example, a first-type neighbor cell and a second-type neighbor cell are not distinguished, but are treated in a same manner. For example, according to the fifth criterion, if the UE does not measure the neighbor cell, the UE may not measure the first-type neighbor cell or the second-type neighbor cell; or if the UE does not measure the neighbor cell on the MR, the UE may not measure the first-type neighbor cell or the second-type neighbor cell on the MR. Alternatively, according to the fifth criterion, if the UE needs to measure the neighbor cell, the UE may measure the first-type neighbor cell and/or the second-type neighbor cell (where a specific type of neighbor cell to be measured or not measured may depend on specific neighbor cells that can be measured based on a measurement capability of the UE, and/or depend on specific neighbor cells that can be measured by the UE). For features such as the first-type neighbor cell and the second-type neighbor cell, refer to related descriptions in the embodiment shown in FIG. 3.

Alternatively, in the application solution of the fifth criterion, different neighbor cells may be treated differently.

For example, if the measurement result of the serving cell corresponding to the WUR fulfills the fifth criterion, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR. It may be understood that a priority corresponding to a frequency of the second-type neighbor cell is lower than or equal to a priority corresponding to a frequency of the serving cell, and a priority corresponding to a frequency of the first-type neighbor cell is higher than the priority corresponding to the frequency of the serving cell. Therefore, if the measurement result of the serving cell corresponding to the WUR fulfills the fifth criterion, the second-type neighbor cell may not be measured or not be measured on the MR, but the first-type neighbor cell has a high priority or importance, and the UE may still keep performing measurement or keep performing measurement on the MR, so that the UE can perform cell reselection, cell handover, or the like based on a measurement result. In addition, in this embodiment of this application, a result of measuring the serving cell on the MR may be used by the UE to perform cell reselection, cell handover, or the like. Therefore, even if the measurement result of the serving cell corresponding to the WUR fulfills the fifth criterion, the UE may also perform relaxed measurement on the serving cell on the MR. However, because the measurement result of the serving cell corresponding to the WUR fulfills the fifth criterion, for example, it indicates that signal quality of the serving cell is good and a probability that the UE performs cell reselection or cell handover is low, the UE may perform relaxed measurement on the serving cell and the first-type neighbor cell on the MR, to reduce the power consumption of the UE as much as possible. For a concept of the result of measuring the serving cell on the MR, refer to related descriptions in the embodiment shown in FIG. 5. In this embodiment of this application, an example of descriptions of "a measurement result of the serving cell corresponding to the MR" is used.

Alternatively, if the measurement result of the serving cell corresponding to the WUR does not fulfill the fifth criterion, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

Alternatively, for example, when the fifth criterion is that the measurement result of the serving cell corresponding to the WUR is greater than the seventh threshold, if the measurement result of the serving cell corresponding to the WUR is greater than the seventh threshold, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR; or if the measurement result of the serving cell corresponding to the WUR is less than or equal to the seventh threshold, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

Alternatively, for example, when the fifth criterion is that the variation of the measurement result of the serving cell corresponding to the WUR is less than the eighth threshold, if the variation of the measurement result of the serving cell corresponding to the WUR is less than the eighth threshold, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR; or if the variation of the measurement result of the serving cell corresponding to the WUR is greater than or equal to the eighth threshold, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

Alternatively, for example, when the fifth criterion is that the measurement result of the serving cell corresponding to the WUR is greater than the seventh threshold and the variation of the measurement result of the serving cell corresponding to the WUR is less than the eighth threshold, if the measurement result of the serving cell corresponding to the WUR is greater than the seventh threshold and the variation of the measurement result of the serving cell corresponding to the WUR is less than the eighth threshold, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR; or if the measurement result of the serving cell corresponding to the WUR is less than or equal to the seventh threshold and/or the variation of the measurement result of the serving cell corresponding to the WUR is greater than or equal to the eighth threshold, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

That is, for the serving cell and a neighbor cell corresponding to a frequency with a high priority, even if the measurement result of the serving cell corresponding to the WUR fulfills the fifth criterion or even if the measurement result of the serving cell corresponding to the WUR is greater than the seventh threshold and/or the variation of the measurement result of the serving cell corresponding to the WUR is greater than or equal to the eighth threshold, the UE may perform measurement, so that the UE can reselect or be handed over to a cell corresponding to a frequency with a high priority as much as possible.

Optionally, the UE performs relaxed measurement on the serving cell. For example, a manner includes increasing a measurement periodicity for the serving cell. Alternatively, the UE may measure the serving cell in another relaxed manner. This is not limited.

S704: The UE determines, according to a sixth criterion based on the measurement result of the serving cell corresponding to the MR, whether to perform relaxed measurement on the neighbor cell of the serving cell on the MR.

In this embodiment of this application, to reduce the power consumption of the UE, the UE may determine, according to the sixth criterion, whether relaxed measurement can be performed on the neighbor cell. For example, if the measurement result of the serving cell corresponding to the WUR fulfills the fifth criterion, the UE may not measure the serving cell on the MR or may perform relaxed measurement on the serving cell on the MR, and may not measure the neighbor cell or not measure the neighbor cell on the MR; or if the measurement result of the serving cell corresponding to the WUR does not fulfill the fifth criterion, the UE may determine, according to the sixth criterion based on the measurement result of the serving cell corresponding to the MR, whether to perform relaxed measurement on the neighbor cell on the MR.

Alternatively, for example, when the fifth criterion is that the measurement result of the serving cell corresponding to the WUR is greater than the seventh threshold, if the measurement result of the serving cell corresponding to the WUR is greater than the seventh threshold, the UE may not measure the serving cell on the MR or may perform relaxed measurement on the serving cell on the MR, and may not measure the neighbor cell or not measure the neighbor cell on the MR; or if the measurement result of the serving cell corresponding to the WUR is less than or equal to the seventh threshold, the UE may determine, according to the sixth criterion based on the measurement result of the serving cell corresponding to the MR, whether to perform relaxed measurement on the neighbor cell on the MR.

Alternatively, for example, when the fifth criterion is that the variation of the measurement result of the serving cell corresponding to the WUR is less than the eighth threshold, if the variation of the measurement result of the serving cell corresponding to the WUR is less than the eighth threshold, the UE may not measure the serving cell on the MR or may perform relaxed measurement on the serving cell on the MR, and may not measure the neighbor cell or not measure the neighbor cell on the MR; or if the variation of the measurement result of the serving cell corresponding to the WUR is greater than or equal to the eighth threshold, the UE may determine, according to the sixth criterion based on the measurement result of the serving cell corresponding to the MR, whether to perform relaxed measurement on the neighbor cell on the MR.

Alternatively, for example, when the fifth criterion is that the measurement result of the serving cell corresponding to the WUR is greater than the seventh threshold and the variation of the measurement result of the serving cell corresponding to the WUR is less than the eighth threshold, if the measurement result of the serving cell corresponding to the WUR is greater than the seventh threshold and the variation of the measurement result of the serving cell corresponding to the WUR is less than the eighth threshold, the UE may not measure the serving cell on the MR or may perform relaxed measurement on the serving cell on the MR, and may not measure the neighbor cell or not measure the neighbor cell on the MR; or if the measurement result of the serving cell corresponding to the WUR is less than or equal to the seventh threshold and/or the variation of the measurement result of the serving cell corresponding to the WUR is greater than or equal to the eighth threshold, the UE may determine, according to the sixth criterion based on the measurement result of the serving cell corresponding to the MR, whether to perform relaxed measurement on the neighbor cell on the MR.

Alternatively, when different types of neighbor cells are distinguished, if the measurement result of the serving cell corresponding to the WUR fulfills the fifth criterion, the UE may not measure the second-type neighbor cell of the serving cell on the MR or not measure the second-type neighbor cell of the serving cell, but the UE may perform relaxed measurement the serving cell and the first-type neighbor cell of the serving cell on the MR; or if the measurement result of the serving cell corresponding to the WUR does not fulfill the fifth criterion, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

Alternatively, when different types of neighbor cells are distinguished, for example, the fifth criterion is that the measurement result of the serving cell corresponding to the WUR is greater than the seventh threshold, if the measurement result of the serving cell corresponding to the WUR is greater than the seventh threshold, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR; or if the measurement result of the serving cell corresponding to the WUR is less than or equal to the seventh threshold, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

Alternatively, when different types of neighbor cells are distinguished, for example, the fifth criterion is that the variation of the measurement result of the serving cell corresponding to the WUR is less than the eighth threshold, if the variation of the measurement result of the serving cell corresponding to the WUR is less than the eighth threshold, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR; or if the variation of the measurement result of the serving cell corresponding to the WUR is greater than or equal to the eighth threshold, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

Alternatively, when different types of neighbor cells are distinguished, for example, the fifth criterion is that the measurement result of the serving cell corresponding to the WUR is greater than the seventh threshold and the variation of the measurement result of the serving cell corresponding to the WUR is less than the eighth threshold, if the measurement result of the serving cell corresponding to the WUR is greater than the seventh threshold and the variation of the measurement result of the serving cell corresponding to the WUR is less than the eighth threshold, the UE may not measure the second-type neighbor cell of the serving cell on the MR or not measure the second-type neighbor cell of the serving cell, but the UE may perform relaxed measurement on the serving cell and the first-type neighbor cell of the serving cell on the MR; or if the measurement result of the serving cell corresponding to the WUR is less than or equal to the seventh threshold and/or the variation of the measurement result of the serving cell corresponding to the WUR is greater than or equal to the eighth threshold, the UE may perform non-relaxed measurement on the serving cell and the first-type neighbor cell of the serving cell on the MR, and may perform relaxed measurement on the second-type neighbor cell on the MR or perform non-relaxed measurement on the second-type neighbor cell on the MR.

The sixth criterion may be used for determining whether the UE performs relaxed measurement on the neighbor cell on the MR. For example, the sixth criterion may also be referred to as a sixth condition or a sixth relaxation criterion. A name is not limited. The sixth criterion may be predefined in a protocol, or may be preconfigured in the UE, or may be configured by the network device. For example, if the sixth criterion is configured by the network device, the network device may send first indication information to indicate the sixth criterion, and the UE can determine the sixth criterion after receiving the first indication information. Optionally, the first indication information and the third indication information indicating the fifth criterion may be same indication information, or may be different indication information. When determining the sixth criterion, the UE may have measured the serving cell on the MR based on a determining result of the fifth criterion, for example, the UE has performed non-relaxed measurement on the serving cell on the MR. Therefore, the sixth criterion described below only relates to how the UE measures the neighbor cell on the MR, and does not relate to the serving cell.

Optionally, the sixth criterion includes that the measurement result of the serving cell corresponding to the MR is greater than an eleventh threshold, and/or includes that a variation of the measurement result of the serving cell corresponding to the MR is less than a twelfth threshold. In this embodiment of this application, because the UE has measured the serving cell on the MR when determining the sixth criterion, the sixth criterion can be determined by using the measurement result of the serving cell corresponding to the MR. Generally, accuracy of the measurement result on the MR is high, and determining based on the measurement result corresponding to the MR can improve determining accuracy. The eleventh threshold may be the same as or different from the first threshold in the embodiment shown in FIG. 3. The eleventh threshold may be the same as or different from the third threshold in the embodiment shown in FIG. 5. The twelfth threshold may be the same as or different from the second threshold in the embodiment shown in FIG. 3. The twelfth threshold may be the same as or different from the fourth threshold in the embodiment shown in FIG. 5.

For example, when the sixth criterion is that the measurement result of the serving cell corresponding to the MR is greater than the eleventh threshold, if the measurement result of the serving cell corresponding to the MR is greater than the eleventh threshold, it is considered that the sixth criterion is fulfilled; or if the measurement result of the serving cell corresponding to the MR is less than or equal to the eleventh threshold, it is considered that the sixth criterion is not fulfilled. Alternatively, when the sixth criterion is that the variation of the measurement result of the serving cell corresponding to the MR is less than the twelfth threshold, if the variation of the measurement result of the serving cell corresponding to the MR is less than the twelfth threshold, it is considered that the sixth criterion is fulfilled; or if the variation of the measurement result of the serving cell corresponding to the MR is greater than or equal to the twelfth threshold, it is considered that the sixth criterion is not fulfilled. Alternatively, when the sixth criterion is that the measurement result of the serving cell corresponding to the MR is greater than the eleventh threshold and the variation of the measurement result of the serving cell corresponding to the MR is less than the twelfth threshold, if the measurement result of the serving cell corresponding to the MR is greater than the eleventh threshold and the variation of the measurement result of the serving cell corresponding to the MR is less than the twelfth threshold, it is considered that the sixth criterion is fulfilled; or if the measurement result of the serving cell corresponding to the MR is less than or equal to the eleventh threshold and/or the variation of the measurement result of the serving cell corresponding to the MR is greater than or equal to the twelfth threshold, it is considered that the sixth criterion is not fulfilled. Because the sixth criterion is determined based on the measurement result of the serving cell corresponding to the MR, the eleventh threshold and/or the twelfth threshold in the sixth criterion may be set based on the measurement result on the MR.

Optionally, if the measurement result of the serving cell corresponding to the MR fulfills the sixth criterion, the UE may perform relaxed measurement on the neighbor cell on the MR; or if the measurement result of the serving cell corresponding to the MR does not fulfill the sixth criterion, the UE may perform non-relaxed measurement on the serving cell and the neighbor cell on the MR (or measure the serving cell and the neighbor cell in a conventional manner).

Alternatively, when the sixth criterion is that the measurement result of the serving cell corresponding to the MR is greater than the eleventh threshold, if the measurement result of the serving cell corresponding to the MR is greater than the eleventh threshold, the UE may perform relaxed measurement on the neighbor cell on the MR; or if the measurement result of the serving cell corresponding to the MR is less than or equal to the eleventh threshold, the UE may perform non-relaxed measurement on the neighbor cell on the MR.

Alternatively, when the sixth criterion is that the variation of the measurement result of the serving cell corresponding to the MR is less than the twelfth threshold, if the variation of the measurement result of the serving cell corresponding to the MR is less than the twelfth threshold, the UE may perform relaxed measurement on the neighbor cell on the MR; or if the variation of the measurement result of the serving cell corresponding to the MR is greater than or equal to the twelfth threshold, the UE may perform non-relaxed measurement on the neighbor cell on the MR.

Alternatively, when the sixth criterion is that the measurement result of the serving cell corresponding to the MR is greater than the eleventh threshold and the variation of the measurement result of the serving cell corresponding to the MR is less than the twelfth threshold, if the measurement result of the serving cell corresponding to the MR is greater than the eleventh threshold and the variation of the measurement result of the serving cell corresponding to the MR is less than the twelfth threshold, the UE may perform relaxed measurement on the neighbor cell on the MR; or if the measurement result of the serving cell corresponding to the MR is less than or equal to the eleventh threshold and/or the variation of the measurement result of the serving cell corresponding to the MR is greater than or equal to the twelfth threshold, the UE may perform non-relaxed measurement on the neighbor cell on the MR.

For example, if the measurement result of the serving cell corresponding to the MR is greater than the eleventh threshold, for example, the measurement result of the serving cell corresponding to the WUR is greater than the eleventh threshold within a period of time, it may be considered that the UE may be located at a cell center. Therefore, the criterion included in the sixth criterion may also be referred to as a "relaxation criterion based on a location of the UE". The UE located at the cell center may not need to perform cell reselection or cell handover, or have a low probability of performing cell reselection or cell handover. Therefore, that the measurement result of the serving cell corresponding to the MR is greater than the eleventh threshold may be used as a relaxation criterion. When the relaxation criterion is fulfilled, the UE may correspondingly perform relaxed measurement on the neighbor cell. For another example, if the variation of the measurement result of the serving cell corresponding to the MR is less than the twelfth threshold, for example, the variation of the measurement result of the serving cell corresponding to the MR is less than the twelfth threshold within a period of time, it may be considered that the UE is in a static state or a low-speed moving state. Therefore, the criterion included in the sixth criterion may also be referred to as a "relaxation criterion based on a UE mobility state". The UE in the static state or the low-speed moving state may not need to perform cell reselection or cell handover, or have a low probability of performing cell reselection or cell handover. Therefore, that the variation of the measurement result of the serving cell corresponding to the MR is less than the twelfth threshold may be used as a relaxation criterion. When the relaxation criterion is fulfilled, the UE may correspondingly perform relaxed measurement on the neighbor cell.

In this embodiment of this application, neighbor cells of the serving cell may be classified into the first-type neighbor cell and the second-type neighbor cell. For this, refer to related descriptions of the embodiment shown in FIG. 3. For the first-type neighbor cell, if the fifth criterion is not fulfilled, the UE performs non-relaxed measurement on the first-type neighbor cell on the MR, and when determining the sixth criterion is performed, it indicates that the fifth criterion is not fulfilled. Therefore, that the UE determines, according to the sixth criterion based on the measurement result of the serving cell corresponding to the MR, whether to perform relaxed measurement on the neighbor cell on the MR may include: The UE determines, according to the sixth criterion based on the measurement result of the serving cell corresponding to the MR, whether to perform relaxed measurement on the second-type neighbor cell of the serving cell on the MR. Optionally, a priority corresponding to a frequency is, for example, a cell reselection priority corresponding to the frequency.

Optionally, that the UE performs relaxed measurement on the neighbor cell (for example, the first-type neighbor cell and/or the second-type neighbor cell) includes, for example, one or more of the following: The UE increases a measurement periodicity for the neighbor cell; the UE reduces a quantity of neighbor cells; or the UE reduces a quantity of to-be-measured frequencies. There may be one or more to-be-measured frequencies, and each frequency corresponds to one or more neighbor cells. Reducing the quantity of to-be-measured frequencies is equivalent to reducing a quantity of to-be-measured neighbor cells. Alternatively, in addition to this manner, the UE may further perform relaxed measurement in another manner. This is not limited herein. A manner in which the UE performs relaxed measurement on the neighbor cell may be set by the UE, may be preconfigured in the UE, may be configured by the network device, may be predefined in a protocol, or the like.

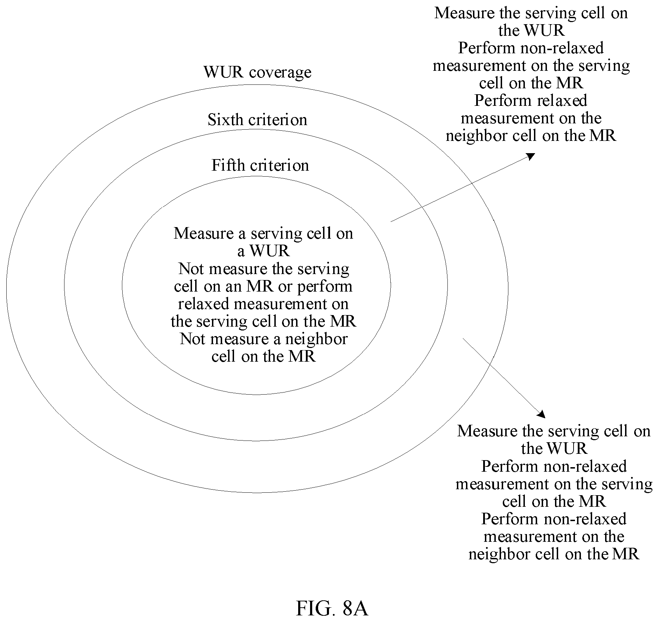

For example, FIG. 8A is a diagram of a solution according to an embodiment of this application. In FIG. 8A, an example in which the fifth criterion and the sixth criterion are applied and the seventh criterion is not applied in this embodiment of this application is used. In addition, in FIG. 8A, an example in which neighbor cells are not distinguished based on types is used. That is, the first-type neighbor cell and the second-type neighbor cell are not distinguished. In FIG. 8A, an innermost circle corresponds to the fifth criterion, being within the circle is considered as that the fifth criterion is fulfilled, and being outside the circle is considered as that the fifth criterion is not fulfilled; a middle circle corresponds to the sixth criterion, being within the circle is considered that the sixth criterion is fulfilled, and being outside the circle is considered that the sixth criterion is not fulfilled; and an outermost circle represents a coverage area of the WUR, for example, an area in which the WUR can receive or decode one or more of an LP-WUS, an LP-SS, or an OOK-modulated signal. For example, if the measurement result of the serving cell corresponding to the MR fulfills the fifth criterion, that is, is located within the innermost circle, the UE may not measure the serving cell on the MR or may perform relaxed measurement on the serving cell on the MR, and may not measure the neighbor cell or not measure the neighbor cell on the MR; or if the measurement result of the serving cell corresponding to the MR does not fulfill the fifth criterion but fulfills the sixth criterion, that is, is located between the innermost circle and the middle circle, the UE may perform non-relaxed measurement on the serving cell on the MR, and perform relaxed measurement on the neighbor cell on the MR; or if the measurement result of the serving cell corresponding to the MR does not fulfill the sixth criterion (where it is clear that the measurement result does not fulfill the fifth criterion either), that is, is located outside the middle circle (for example, located outside the middle circle and within the outermost circle), the UE may perform non-relaxed measurement on the serving cell and the neighbor cell on the MR. Regardless of whether the fifth criterion is fulfilled and regardless of whether the sixth criterion is fulfilled, the UE may measure the serving cell on the WUR.

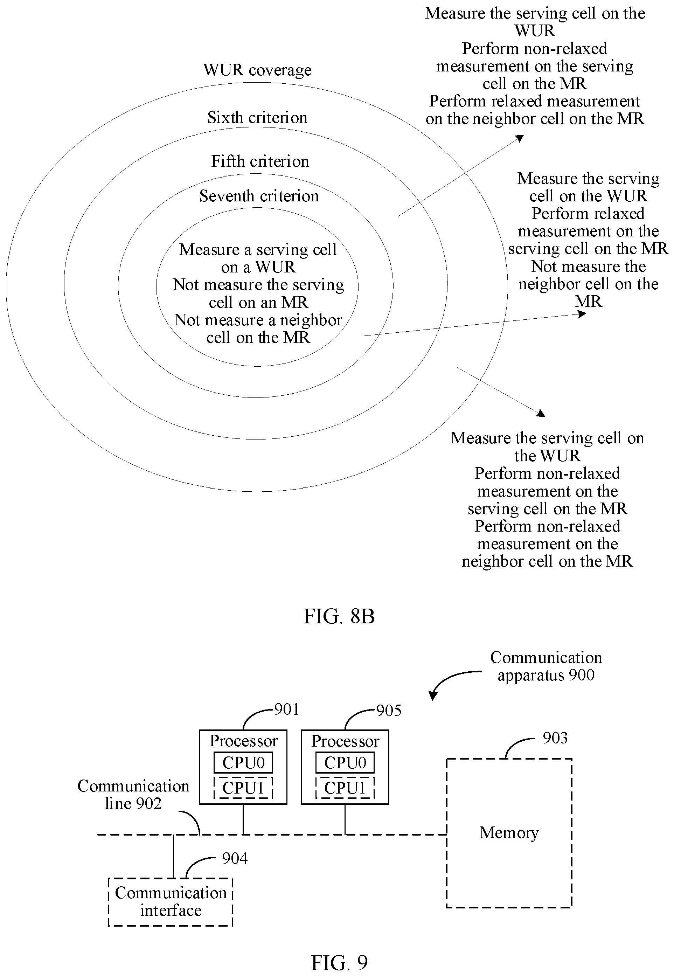

For another example, FIG. 8B is another diagram of a solution according to an embodiment of this application. In FIG. 8B, an example in which the fifth criterion, the sixth criterion, and the seventh criterion are applied in this embodiment of this application is used. In addition, in FIG. 8B, an example in which neighbor cells are not distinguished based on types is used. That is, the first-type neighbor cell and the second-type neighbor cell are not distinguished. In FIG. 8B, a 1^{st} innermost circle corresponds to the seventh criterion, being within the 1^{st} circle is considered as that the seventh criterion is fulfilled, and being outside the 1^{st} circle is considered as that the seventh criterion is not fulfilled. In FIG. 8B, a 2^{nd} circle from inside to outside corresponds to the fifth criterion, being within the 2^{nd} circle is considered as that the fifth criterion is fulfilled, and being outside the 2^{nd} circle is considered as that the fifth criterion is not fulfilled. In FIG. 8B, a 3^{rd} circle from inside to outside corresponds to the sixth criterion, being within the 3^{rd} circle is considered as that the sixth criterion is fulfilled, and being outside the 3^{rd} circle is considered as that the sixth criterion is not fulfilled. An outermost circle represents a coverage area of the WUR, for example, an area in which the WUR can receive or decode one or more of an LP-WUS, an LP-SS, or an OOK-modulated signal. For example, if the measurement result of the serving cell corresponding to the MR fulfills the seventh criterion, that is, is located within the innermost circle, the UE may not measure the serving cell or the neighbor cell on the MR; or if the measurement result of the serving cell corresponding to the MR fulfills the fifth criterion, that is, is located outside the innermost circle and within the 2^{nd} circle from inside to outside, the UE may perform relaxed measurement on the serving cell on the MR, and not measure the neighbor cell or not measure the neighbor cell on the MR; or if the measurement result of the serving cell corresponding to the MR does not fulfill the fifth criterion (or does not fulfill the seventh criterion either) but fulfills the sixth criterion, that is, is located between the 2^{nd} circle and the 3^{rd} circle from inside to outside, the UE may perform non-relaxed measurement on the serving cell on the MR, and perform relaxed measurement on the neighbor cell on the MR; or if the measurement result of the serving cell corresponding to the MR does not fulfill the sixth criterion (where it is clear that the measurement result does not fulfill the fifth criterion either), that is, is located outside the 3^{rd} circle from inside to outside (for example, located outside the 3^{rd} circle from inside to outside and within the outermost circle), the UE may perform non-relaxed measurement on the serving cell and the neighbor cell on the MR. Regardless of whether the fifth criterion is fulfilled and regardless of whether the sixth criterion is fulfilled, the UE may measure the serving cell on the WUR.

In conclusion, in this embodiment of this application, the UE may measure the serving cell on the WUR, and may determine, according to the fifth criterion, whether to perform relaxed measurement on the serving cell on the MR, or determine, according to the seventh criterion, whether to not measure the serving cell on the MR, so that power consumption caused by measuring the serving cell on the MR is reduced. In addition, the UE may further determine, according to the sixth criterion based on the measurement result of the serving cell corresponding to the MR, whether to perform relaxed measurement on the neighbor cell on the MR. If relaxed measurement is performed on the neighbor cell on the MR, measurement power consumption on the MR can be further reduced, thereby reducing device power consumption to a large extent. In this embodiment of this application, the measurement action on the serving cell is decoupled from the measurement action on the neighbor cell, so that the measurement actions of the UE are more reasonable.

FIG. 9 is a diagram of a structure of a communication apparatus according to an embodiment of this application. The communication apparatus 900 may be the UE in the embodiment shown in any one of FIG. 3, FIG. 5, or FIG. 7 or a circuit system of the UE, and is configured to implement the method corresponding to the UE in the foregoing method embodiments. For example, the circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. The memory 903, the communication line 902, and the communication interface 904 are all optional, and therefore are all represented by using dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 900 through an antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 902 may include a path for information transmission between the foregoing components.

The communication interface 904 uses any transceiver-type apparatus, to communicate with another device or a communication network, for example, as an ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in an instruction or data structure form and that can be accessed by a computer. However, this is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls execution. The processor 901 is configured to execute the computer-executable instructions stored in the memory 903, to implement the steps performed by the UE in the embodiment shown in any one of FIG. 3, FIG. 5, or FIG. 7.

Optionally, the computer-executable instructions in this embodiment of this application may also be referred to as application program code. This is not specifically limited in embodiments of this application.

During specific implementation, in an embodiment, the processor 901 may include one or more CPUs, for example, CPU0 and CPU1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the UE, the chip includes the processor 901 (and may further include the processor 905), the communication line 902, and the communication interface 904, and optionally, may further include the memory 903. Specifically, the communication interface 904 may be an input interface, a pin, a circuit, or the like. The memory 903 may be a register, a cache, or the like. The processor 901 and the processor 905 may be a general-purpose CPU, a microprocessor, an ASIC, or one or more integrated circuits configured to control program execution of the communication method in any one of the foregoing embodiments.

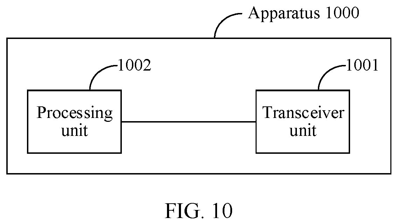

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 10 is a diagram of an apparatus. The apparatus 1000 may be the UE in the foregoing method embodiments or a chip in the UE. The apparatus 1000 includes a processing unit 1002 and a transceiver unit 1001.

It should be understood that the apparatus 1000 may be configured to implement the steps performed by the UE in the communication method in embodiments of this application. For related features, refer to the embodiment shown in any one of FIG. 3, FIG. 5, or FIG. 7. Details are not described herein again.

Optionally, functions/implementation processes of the transceiver unit 1001 and the processing unit 1002 in FIG. 10 may be implemented by the processor 901 in FIG. 9 by invoking the computer-executable instructions stored in the memory 903. Alternatively, functions/implementation processes of the processing unit 1002 in FIG. 10 may be implemented by the processor 901 in FIG. 9 by invoking the computer-executable instructions stored in the memory 903, and functions/implementation processes of the transceiver unit 1001 in FIG. 10 may be implemented by the communication interface 904 in FIG. 9.

Optionally, when the apparatus 1000 is a chip or a circuit, the functions/implementation processes of the transceiver unit 1001 may alternatively be implemented by a pin, a circuit, or the like. Optionally, the transceiver unit 1001 may include a sending unit and/or a receiving unit. The sending unit is configured to implement a sending function, and the receiving unit is configured to implement a receiving function. Alternatively, the transceiver unit 1001 may be an integral module that can implement the sending function and/or the receiving function. Optionally, the transceiver unit 1001 may be implemented by a transceiver.

This application further provides a computer-readable storage medium. The computer-readable storage medium stores a computer program or instructions. When the computer program or the instructions are run, the method performed by the UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the UE in any one of the foregoing method embodiments.

An embodiment of this application further provides a processing apparatus, including a processor and an interface. The processor is configured to perform the method performed by the UE in any one of the foregoing method embodiments.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or part of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logical units and circuits described in embodiments of this application may implement or operate the described functions by a general-purpose processor, a digital signal processor (digital signal processor, DSP), an ASIC, a field-programmable gate array (field-programmable gate array, FPGA) or another programmable logic apparatus, a discrete gate or a transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of compute apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined to form a new embodiment based on an internal logical relationship between the technical features.

It may be understood that, in embodiments of this application, the UE may perform a part or all of the steps in embodiments of this application. These steps or operations are merely examples. In embodiments of this application, other operations or variants of various operations may be further performed. In addition, the steps may be performed in a sequence different from that presented in embodiments of this application, and not all operations in embodiments of this application may be necessarily performed.

## Claims

1. A communication method, wherein the method comprises:
measuring a serving cell on a wake up radio WUR, and skipping measuring the serving cell on a main radio MR; and
determining, according to a first criterion based on a result of measuring the serving cell on the WUR, whether to perform relaxed measurement on a neighbor cell of the serving cell on the MR, wherein the first criterion comprises that the measurement result is greater than a first threshold, and/or comprises that a variation of the measurement result is less than a second threshold.

2. The method according to claim 1, wherein determining, according to the first criterion based on the result of measuring the serving cell on the WUR, whether to perform relaxed measurement on the neighbor cell of the serving cell on the MR comprises:
when the result of measuring the serving cell on the WUR fulfills the first criterion, performing relaxed measurement on the neighbor cell on the MR; or
when the result of measuring the serving cell on the WUR does not fulfill the first criterion, performing non-relaxed measurement on the neighbor cell on the MR.

3. The method according to claim 1 or 2, wherein determining, according to the first criterion based on the result of measuring the serving cell on the WUR, whether to perform relaxed measurement on the neighbor cell of the serving cell on the MR comprises:
when the result of measuring the serving cell on the WUR does not fulfill a second criterion, determining, according to the first criterion based on the result of measuring the serving cell on the WUR, whether to perform relaxed measurement on the neighbor cell on the MR.

4. The method according to any one of claims 1 to 3, wherein the method further comprises:
when the result of measuring the serving cell on the WUR fulfills the second criterion, skipping measuring the neighbor cell on the MR.

5. The method according to claim 1 or 2, wherein determining, according to the first criterion based on the result of measuring the serving cell on the WUR, whether to perform relaxed measurement on the neighbor cell of the serving cell on the MR comprises:
when the result of measuring the serving cell on the WUR does not fulfill a second criterion, determining, according to the first criterion based on the result of measuring the serving cell on the WUR, whether to perform relaxed measurement on a first-type neighbor cell and/or a second-type neighbor cell of the serving cell on the MR, wherein a priority corresponding to a frequency of the first-type neighbor cell is higher than a priority corresponding to a frequency of the serving cell, and a priority corresponding to a frequency of the second-type neighbor cell is equal to or lower than the priority corresponding to the frequency of the serving cell.

6. The method according to claim 1, 2, or 5, wherein the method further comprises:
when the result of measuring the serving cell on the WUR fulfills the second criterion, skipping measuring the second-type neighbor cell of the serving cell, and performing relaxed measurement on the first-type neighbor cell of the serving cell on the MR or performing non-relaxed measurement on the first-type neighbor cell of the serving cell on the MR, wherein the priority corresponding to the frequency of the first-type neighbor cell is higher than the priority corresponding to the frequency of the serving cell, and the priority corresponding to the frequency of the second-type neighbor cell is equal to or lower than the priority corresponding to the frequency of the serving cell.

7. The method according to any one of claims 1 to 6, wherein the result of measuring the serving cell on the WUR comprises reference signal received power RSRP obtained by measuring the serving cell on the WUR and/or reference signal received quality RSRQ obtained by measuring the serving cell on the WUR.

8. The method according to any one of claims 1 to 7, wherein performing relaxed measurement on the neighbor cell of the serving cell comprises one or more of the following:
increasing a measurement periodicity for the neighbor cell;
reducing a quantity of neighbor cells; or
reducing a quantity of to-be-measured frequencies, wherein the frequency corresponds to the neighbor cell.

9. The method according to any one of claims 1 to 8, wherein the method further comprises:
receiving first indication information, wherein the first indication information indicates the first criterion.

10. The method according to any one of claims 1 to 9, wherein the method further comprises:
receiving second indication information, wherein the second indication information indicates to enable the WUR or a low power wake up signal WUS on the WUR.

11. A communication method, wherein the method comprises:
when a result of measuring a serving cell on a WUR does not fulfill a third criterion, measuring the serving cell and a neighbor cell of the serving cell on an MR; and
determining, according to a fourth criterion based on a result of measuring the serving cell on the MR, whether to perform relaxed measurement on the serving cell and the neighbor cell of the serving cell on the MR, wherein the fourth criterion comprises that the result of measuring the serving cell on the MR is greater than a third threshold, and/or comprises that a variation of the result of measuring the serving cell on the MR is less than a fourth threshold.

12. The method according to claim 11, wherein determining, according to the fourth criterion based on the result of measuring the serving cell on the MR, whether to perform relaxed measurement on the serving cell and the neighbor cell of the serving cell on the MR comprises:
when the result of measuring the serving cell on the MR fulfills the fourth criterion, performing relaxed measurement on the serving cell and the neighbor cell on the MR; or
when the result of measuring the serving cell on the MR does not fulfill the fourth criterion, performing non-relaxed measurement on the serving cell and the neighbor cell on the MR.

13. The method according to claim 11 or 12, wherein the method further comprises:
when the result of measuring the serving cell on the WUR fulfills the third criterion, skipping measuring the serving cell and the neighbor cell on the MR.

14. The method according to claim 11 or 12, wherein the method further comprises:
when the result of measuring the serving cell on the WUR fulfills the third criterion, skipping measuring a second-type neighbor cell of the serving cell, and performing relaxed measurement on the serving cell and a first-type neighbor cell of the serving cell on the MR, wherein a priority corresponding to a frequency of the first-type neighbor cell is higher than a priority corresponding to a frequency of the serving cell.

15. The method according to claim 11, 12, or 14, wherein determining, according to the fourth criterion based on the result of measuring the serving cell on the MR, whether to perform relaxed measurement on the serving cell and the neighbor cell of the serving cell on the MR comprises:
determining, according to the fourth criterion based on the result of measuring the serving cell on the MR, whether to perform relaxed measurement on the serving cell and the first-type neighbor cell and/or the second-type neighbor cell of the serving cell on the MR, wherein the priority corresponding to the frequency of the first-type neighbor cell is higher than the priority corresponding to the frequency of the serving cell, and a priority corresponding to a frequency of the second-type neighbor cell is equal to or lower than the priority corresponding to the frequency of the serving cell.

16. The method according to any one of claims 11 to 15, wherein
the result of measuring the serving cell on the WUR comprises RSRP obtained by measuring the serving cell on the WUR and/or RSRQ obtained by measuring the serving cell on the WUR; and/or
the result of measuring the serving cell on the MR comprises RSRP obtained by measuring the serving cell on the MR and/or RSRQ obtained by measuring the serving cell on the MR.

17. The method according to any one of claims 11 to 16, wherein performing relaxed measurement on the serving cell and the neighbor cell of the serving cell comprises one or more of the following:
increasing a measurement periodicity for the serving cell;
increasing a measurement periodicity for the neighbor cell;
reducing a quantity of neighbor cells; or
reducing a quantity of to-be-measured frequencies, wherein the frequency corresponds to the neighbor cell.

18. The method according to any one of claims 11 to 17, wherein the method further comprises:
receiving first indication information, wherein the first indication information indicates the fourth criterion.

19. The method according to any one of claims 11 to 18, wherein the method further comprises:
receiving second indication information, wherein the second indication information indicates to enable the WUR or a low power WUS on the WUR.

20. A communication method, wherein the method comprises:
when a result of measuring a serving cell on a WUR does not fulfill a fifth criterion, performing non-relaxed measurement on the serving cell on an MR, wherein the fifth criterion comprises that the result of measuring the serving cell on the WUR is greater than a fifth threshold, and/or comprises that a variation of the result of measuring the serving cell on the WUR is less than a sixth threshold; and
determining, according to a sixth criterion based on a result of measuring the serving cell on the MR, whether to perform relaxed measurement on a neighbor cell of the serving cell on the MR.

21. The method according to claim 20, wherein determining, according to the sixth criterion based on the result of measuring the serving cell on the MR, whether to perform relaxed measurement on the neighbor cell of the serving cell on the MR comprises:
when the result of measuring the serving cell on the MR fulfills the sixth criterion, performing relaxed measurement on the neighbor cell on the MR; or
when the result of measuring the serving cell on the MR does not fulfill the sixth criterion, performing non-relaxed measurement on the neighbor cell on the MR.

22. The method according to claim 20 or 21, wherein the method further comprises:
when the result of measuring the serving cell on the WUR fulfills the fifth criterion, skipping measuring the serving cell on the MR, or measuring the serving cell on the MR in a relaxed measurement manner, and skipping measuring the neighbor cell.

23. The method according to claim 22, wherein when the result of measuring the serving cell on the WUR fulfills the fifth criterion, skipping measuring the serving cell on the MR, or measuring the serving cell on the MR in the relaxed measurement manner comprises:
when the result of measuring the serving cell on the WUR fulfills the fifth criterion and a seventh criterion, skipping measuring the serving cell on the MR; or
when the result of measuring the serving cell on the WUR fulfills the fifth criterion and does not fulfill the seventh criterion, measuring the serving cell on the MR in the relaxed measurement manner, wherein
the seventh criterion comprises that the result of measuring the serving cell on the WUR is greater than a seventh threshold, and/or comprises that a variation of the result of measuring the serving cell on the WUR is less than an eighth threshold.

24. The method according to claim 20 or 21, wherein the method further comprises:
when the result of measuring the serving cell on the WUR fulfills the fifth criterion, performing relaxed measurement on the serving cell and a first-type neighbor cell of the serving cell on the MR, and skipping measuring a second-type neighbor cell of the serving cell on the MR, wherein a priority corresponding to a frequency of the first-type neighbor cell is higher than a priority corresponding to a frequency of the serving cell, and a priority corresponding to a frequency of the second-type neighbor cell is equal to or lower than the priority corresponding to the frequency of the serving cell.

25. The method according to claim 20, 21, or 24, wherein the method further comprises:
when the result of measuring the serving cell on the WUR does not fulfill the fifth criterion, performing non-relaxed measurement on the first-type neighbor cell of the serving cell on the MR, wherein the priority corresponding to the frequency of the first-type neighbor cell is higher than the priority corresponding to the frequency of the serving cell.

26. The method according to claim 20, 21, 24, or 25, wherein determining, according to the sixth criterion based on the result of measuring the serving cell on the MR, whether to perform relaxed measurement on the neighbor cell of the serving cell on the MR comprises:
determining, according to the sixth criterion based on the result of measuring the serving cell on the MR, whether to perform relaxed measurement on the second-type neighbor cell of the serving cell on the MR, wherein the priority corresponding to the frequency of the second-type neighbor cell is equal to or lower than the priority corresponding to the frequency of the serving cell.

27. The method according to any one of claims 20 to 26, wherein
the result of measuring the serving cell on the WUR comprises RSRP obtained by measuring the serving cell on the WUR and/or RSRQ obtained by measuring the serving cell on the WUR; and/or
the result of measuring the serving cell on the MR comprises RSRP obtained by measuring the serving cell on the MR and/or RSRQ obtained by measuring the serving cell on the MR.

28. The method according to any one of claims 20 to 27, wherein performing relaxed measurement on the neighbor cell of the serving cell comprises one or more of the following:
increasing a measurement periodicity for the neighbor cell;
reducing a quantity of neighbor cells; or
reducing a quantity of to-be-measured frequencies, wherein the frequency corresponds to the neighbor cell.

29. The method according to any one of claims 20 to 28, wherein the method further comprises: receiving third indication information, wherein the third indication information indicates the second criterion.

30. The method according to any one of claims 20 to 29, wherein the method further comprises:
receiving second indication information, wherein the second indication information indicates to enable the WUR or a low power WUS on the WUR.

31. A communication apparatus, wherein the communication apparatus comprises a processing unit and a transceiver unit, and the processing unit is coupled to the transceiver unit, to perform the method according to any one of claims 1 to 10, or perform the method according to any one of claims 11 to 19, or perform the method according to any one of claims 20 to 30.

32. A communication apparatus, wherein the communication apparatus comprises a processor coupled to a memory, the memory is configured to store a computer program, and the processor is configured to execute the computer program stored in the memory, to cause the communication apparatus to perform the method according to any one of claims 1 to 10, or cause the communication apparatus to perform the method according to any one of claims 11 to 19, or cause the communication apparatus to perform the method according to any one of claims 20 to 30.

33. A computer-readable storage medium, wherein the computer-readable storage medium is configured to store a computer program, and when the computer program runs on a computer, the computer is caused to perform the method according to any one of claims 1 to 10, or the computer is caused to perform the method according to any one of claims 11 to 19, or the computer is caused to perform the method according to any one of claims 20 to 30.

34. A computer program product, wherein the computer program product comprises a computer program, and when the computer program runs on a computer, the computer is caused to perform the method according to any one of claims 1 to 10, or the computer is caused to perform the method according to any one of claims 11 to 19, or the computer is caused to perform the method according to any one of claims 20 to 30.

35. A chip, wherein the chip comprises:
a processor and an interface, wherein the processor is configured to invoke instructions from the interface and run the instructions, and when the processor executes the instructions, the method according to any one of claims 1 to 10 is implemented, or the method according to any one of claims 11 to 19 is implemented, or the method according to any one of claims 20 to 30 is implemented.
